# EUROPEAN PATENT APPLICATION

(11) **EP 4 693 780 A1**
(43) Date of publication of application: **11.02.2026**
(21) Application number: 24780203.6
(22) Date of filing: 25.03.2024
(51) Int. Cl.: H02G 11/02, B62D 1/04, H01R 35/04, H01R 43/00, H02G 1/14, H02G 15/10

(54) **CABLE ASSEMBLY, ROTARY CONNECTOR DEVICE, AND METHOD FOR MANUFACTURING CABLE ASSEMBLY**

(30) Priority: 28.03.2023 JP 2023051782
(71) Applicant: FURUKAWA ELECTRIC CO., LTD., Tokyo 100-8322 (JP); FURUKAWA AUTOMOTIVE SYSTEMS INC., Shiga 522-0242 (JP)
(72) Inventor: USHIYAMA Masatoshi, Inukami-gun, Shiga 522-0242 (JP); KITAMURA Tomohiro, Inukami-gun, Shiga 522-0242 (JP); OKUMURA Masahiro, Inukami-gun, Shiga 522-0242 (JP); ARAKAWA Hayato, Inukami-gun, Shiga 522-0242 (JP); TAJIRI Yoji, Inukami-gun, Shiga 522-0242 (JP); KAWAMURA Yukihiro, Inukami-gun, Shiga 522-0242 (JP); ITO Tomoharu, Inukami-gun, Shiga 522-0242 (JP); UTSUNOMIYA Hirofumi, Inukami-gun, Shiga 522-0242 (JP)
(74) Representative: Weickmann & Weickmann PartmbB
(86) International application number: PCT/JP2024/011742
(87) International publication number: WO 2024/204086

(57) **Abstract**

A cable assembly 44 A includes a first bonding member 60 coupling the covering material 34 and the connector housing 50 so as to suppress movement of the flat cable 30 relative to the connector 45. The first bonding member 60 is made of a thermoplastic resin. The connector housing 50 includes a mounting surface 51 on which the flat cable 30 is mounted. The first bonding member 60 includes a first portion 62 provided inside the contour CON of the covering material 34 when viewed from the first direction D1 substantially perpendicular to the mounting surface 51, and a second portion 63 extending from the first portion 62 and provided outside the contour CON when viewed from the first direction Dl. The first portion 62 has a first projected area defined inside the contour CON when viewed from the first direction D1. The second portion 63 has a second projected area defined outside the contour CON when viewed from the first direction D1. The first projected area is larger than the second projected area.

## Description

### Technical Field

The technology disclosed in the present application relates to a cable assembly, a rotary connector device, and a cable assembly manufacturing method.

### Background Art

Patent Document 1 discloses stabilizing the position of a flat cable with respect to a connector by inserting a projection of the connector into a support hole provided in the flat cable, and a technique for joining a conductor in a flat cable to a bus bar of a connector. Further, Patent Document 1 discloses a technique of joining a conductor in a flat cable to a bus bar of a connector by sandwiching an end portion of the flat cable in a width direction with a pressing portion of the connector to stabilize a position of the flat cable with respect to the connector.

### Citation List

### Patent Literature

Patent Document 1: Japanese Patent Application Laid-Open No. 2002-373750

### Problem to be Solved by the Invention

However, in the fixing method of inserting the protrusion of the connector into the support hole provided in the flat cable to stabilize the position of the flat cable with respect to the connector, warpage may occur at the end portion of the flat cable in the width direction during connection. On the other hand, the method of sandwiching the flat cable with the pressing portion has a problem that the position of the flat cable with respect to the connector is likely to be displaced when the pressing portion is bent.

An object of the technology disclosed in the present application is to provide a technology capable of suppressing warpage of an end portion of a flat cable in a width direction and easily fixing the flat cable to a connector with high accuracy when the flat cable is connected to the connector.

### Solution to Problem

In accordance with a first aspect, a cable assembly includes a connector, a flat cable, and a first bonding member. The connector includes at least two bus bars having electrical conductivity, and a connector housing having electrical insulation properties and partially covering the at least two bus bars. The flat cable includes at least two core wires having conductivity and electrically connected to at least two bus bars, respectively, and a coating material having electrical insulation properties and partially covering the at least two core wires. The first bonding member, which is formed of a thermoplastic resin, configured to couple the covering material and the connector housing to suppress the movement of the flat cable relative to the connector. The connector housing includes a mounting surface on which the flat cable is mounted. The first bonding member includes a first portion provided inside a contour of the covering material when viewed from a first direction substantially perpendicular to the mounting surface, and a second portion extending from the first portion and provided outside the contour when viewed from the first direction. The first portion has a first projected area defined inside the contour when viewed in the first direction. The second portion has a second projected area defined inside the contour when viewed in the first direction. The first projected area is larger than the second projected area.

In the cable assembly according to the first aspect, the first bonding member made of the thermoplastic resin is used to suppress the movement of the flat cable with respect to the connector. Further, since the first bonding member includes the first portion provided inside the contour of the covering material when viewed from the first direction and the second portion extending from the first portion and provided outside the contour when viewed from the first direction, it is possible to suppress the warpage of the end portion of the flat cable in the width direction and to easily fix the flat cable to the connector with high accuracy. Furthermore, since the first projection area is larger than the second projection area, the flat cable can be fixed to the connector more strongly by the first bonding member.

In accordance with a second aspect, in the cable assembly according to the first aspect, the first bonding member is not molded.

In the cable assembly according to the second aspect, the first bonding member can be formed by melting the thermoplastic resin without using injection molding or die molding, and thus the flat cable can be fixed to the connector more easily.

In accordance with a third aspect, the cable assembly according to the first or second aspect further includes a first protrusion adjacent to the first bonding member in a second direction perpendicular to the first direction and in which the at least two bus bars are arranged, and extending from the mounting surface in the first direction. The second portion of the first bonding member is provided between the first portion of the first bonding member and the first protrusion in the second direction.

In the cable assembly according to the third aspect, the first protrusion allows the melted thermoplastic resin to flow toward the flat cable, and thus the flat cable can be fixed to the connector more strongly by the first bonding member.

In accordance with a fourth aspect, in the cable assembly according to the third aspect, the first bonding member and the first protrusion are made of common thermoplastic material and are directly connected to each other.

In the cable assembly according to the fourth aspect, since one first protrusion is provided and the first bonding member can be formed by partially melting the first protrusion, the number of working process can be reduced in addition to the third aspect.

In accordance with a fifth aspect, in the cable assembly according to the fourth aspect, a first protrusion includes a first wall being capable of abutting the covering material, a second wall being capable of abutting the covering material, which is provided on the opposite side of the first bonding member from the first wall in a third direction perpendicular to the first direction and the second direction, and a third wall couples the first wall and the second wall. The second portion of the first bonding member is sandwiched between the third wall and the first portion of the first bonding member in the second direction.

In the cable assembly according to the fifth aspect, the flow of the molten thermoplastic resin in the length direction of the flat cable is suppressed by the first wall and the second wall, and the flow of the molten thermoplastic resin in the width direction of the flat cable is promoted by the third wall. Therefore, the flat cable can be fixed to the connector more strongly by the first bonding member.

In accordance with a sixth aspect, in the cable assembly according to any one of the first to fifth aspects, the connector housing has a first recess in a surface opposite to the mounting surface in the first direction in a portion overlapping the first bonding member in the first direction. The center of the first recess in a second direction perpendicular to the first direction and in which at least two bus bars are arranged is located between the first core wire closest to the second portion among the at least two core wires in the second direction.

In the cable assembly according to the sixth aspect, when the first protrusion is heated, the thin portion forming the bottom of the first recess in the connector housing is bent by the heat, and the first protrusion is inclined toward the flat cable. This further promotes the flow of the molten thermoplastic resin in the width direction of the flat cable, and thus the flat cable can be fixed to the connector more strongly by the first bonding member.

In accordance with a seventh aspect, in the cable assembly according to any one of the third to fifth aspects and the sixth aspect including the third to fifth aspects, the first protrusion has a first notch recessed in the second direction.

This further promotes the flow of the molten thermoplastic resin in the width direction of the flat cable, and thus the flat cable can be fixed to the connector more strongly by the first bonding member.

According to an eighth aspect, in the cable assembly according to any one of the first to seventh aspects, the covering material of the flat cable has a cutout for exposing the exposed portions of the at least two core wires. The connector housing has a first protruding portion protruding in the second direction toward the exposed portions of at least two core wires in the cutout, and a body wall extending in the second direction on which the cable end of the flat cable can abut. The first protruding portion is capable of abutting against the covering material.

In the cable assembly according to the eighth aspect, the flat cable is easily positioned in the length direction.

According to a ninth aspect, in the cable assembly according to the eighth aspect, the covering material of the flat cable has a first cover notch that is recessed in the second direction from a first end of the covering material in the second direction without exposing the at least two core wires on the opposite side of the cable end with respect to the cutout. The second portion is provided to engage with the first cover notch.

In the cable assembly according to the ninth aspect, the flat cable is more strongly fixed by the first bonding member.

In accordance with the tenth aspect, the cable assembly according to any one of the first to ninth aspects further includes the second bonding member that is opposite to the first bonding member with respect to the flat cable in the second direction in which the at least two bus bars are arranged, couples the covering material and the connector housing to each other so as to suppress movement of the flat cable with respect to the connector, and is made of the thermoplastic resin. The second bonding member includes a third portion provided inside the contour when viewed from the first direction, and a fourth portion extending from the third portion and provided outside the contour when viewed from the first direction. The third portion has a third projected area defined inside the contour when viewed from the first direction. The fourth portion has a fourth projected area defined outside the contour when viewed from the first direction. The third projected area is larger than the fourth projected area.

In the cable assembly according to the tenth aspect, the flat cable can be fixed from both ends of the flat cable by the first bonding member and the second bonding member, and thus the flat cable can be fixed to the connector more strongly by the first bonding member.

In accordance with an eleventh aspect, the cable assembly according to the tenth aspect further includes a second protrusion that is adjacent to the second bonding member in the second direction and extends from the mounting surface in the first direction. The fourth portion of the second bonding member is provided between the third portion of the second bonding member and the second protrusion in the second direction. The second bonding member and the second protrusion are made of common thermoplastic material and are directly connected. The second protrusion includes a fourth wall that can abut against the covering material, a fifth wall that is provided on the opposite side of the second bonding member from the fourth wall in a third direction perpendicular to the first direction and the second direction and that can abut against the covering material, and a sixth wall that couples the fourth wall and the fifth wall. The fourth portion of the second bonding member is sandwiched between the sixth wall and the third portion of the second bonding member in the second direction.

In the cable assembly according to the eleventh aspect, in addition to the effects of the third and fourth aspects, the orientation of the flat cable can be adjusted by the first protrusion and the second protrusion, and thus the orientation of the flat cable can be adjusted with high accuracy.

According to a twelfth aspect, in the cable assembly according to the tenth or eleventh aspect, the connector housing further includes a second protruding portion that protrudes in the second direction toward the exposed portions of the at least two core wires in the cutout 33, on the opposite side of the first protruding portion in the second direction. The second protrusion is capable of abutting against the covering material.

In the cable assembly according to the twelfth aspect, in addition to the effect of the eighth aspect, the second protruding portion further facilitates the positioning of the flat cable in the length direction.

According to a thirteenth aspect, in the cable assembly according to the twelfth aspect, the covering material of the flat cable has a second cover notch that does not expose the at least two core wires and is recessed in the second direction from a second end of the covering material opposite to the first end in the second direction. The fourth portion is provided to engage with the second cover notch.

In the cable assembly according to the thirteenth aspect, in addition to the effect of the ninth aspect, the flat cable can be fixed more strongly by the second bonding member.

In accordance with a fourteenth aspect, in the cable assembly according to the thirteenth aspect, the overlapping portion, when viewed from the first direction, is disposed to at least partially overlap the main portion in a state of being disposed in the support groove.

In the cable assembly according to the fourteenth aspect, an increase in the space occupied by the overlapping portion can be suppressed. Therefore, it is possible to suppress or prevent a short circuit between the first flat cable and the second flat cable while reliably suppressing an increase in manufacturing cost.

In accordance with a fourteenth aspect, a rotary connector device includes a stator, a rotator rotatable about a rotation axis with respect to the stator, and the cable assembly according to any one of the first to thirteenth aspects.

In the rotary connector device according to the fourteenth aspect, by using the cable assembly, it is possible to suppress the warpage of the end portion of the flat cable in the widthwise direction and to easily fix the flat cable to the connector with high accuracy. Furthermore, since the first projection area is larger than the second projection area, the flat cable can be fixed to the connector more strongly by the first bonding member.

In accordance with the fifteenth aspect, a method of manufacturing the cable assembly includes providing a flat cable including at least two core wires having conductivity and a covering material having electrical insulation properties and partially covering the at least two core wires. The manufacturing method includes providing a connector including at least two bus bars having conductivity and a connector housing having electrical insulation properties and partially covering the at least two bus bars. The manufacturing method includes providing a first projection made of a thermoplastic material on a mounting surface of a connector housing. The manufacturing method includes disposing a flat cable on the mounting surface so as to abut against the first protrusion. The manufacturing method includes melting the thermoplastic material by abutting the heating body against the first protrusion, and providing the melted thermoplastic material on the covering material. The manufacturing method includes solidifying the molten thermoplastic material to fix the flat cable to the mounting surface. The manufacturing method includes electrically connecting the exposed portions of the at least two core wires exposed from the covering material to the at least two bus bars, respectively.

In the manufacturing method according to the fifteenth aspect, it is possible to suppress the warpage of the end portion of the flat cable in the width direction and to easily fix the flat cable to the connector with high accuracy.

In accordance with the sixteenth aspect, in the manufacturing method according to the fifteenth aspect, the solidifying the molten thermoplastic material includes forming the first bonding member made of the thermoplastic material including the first portion provided inside the contour of the covering material when viewed from the first direction substantially perpendicular to the mounting surface and the second portion extending from the first portion and provided outside the contour when viewed from the first direction. The first portion has a first projected area defined inside the contour when viewed in the first direction. The second portion has a second projected area defined inside the contour when viewed in the first direction. The first projected area is larger than the second projected area.

In the manufacturing method according to the sixteenth aspect, the first projection area is larger than the second projection area, and thus the flat cable can be more strongly fixed to the connector by the first bonding member.

In accordance with the seventeenth aspect, in the manufacturing method according to the fifteenth or sixteenth aspect, when the heating body is viewed in the third direction in which the flat cable extends in a state where the flat cable is disposed on the mounting surface in contact with the first protrusion, the first inclined surface of the heating body inclined to be separated from the mounting surface in the first direction as it extends from the first outer end of the heating body facing the first protrusion in the first direction substantially perpendicular to the mounting surface toward the center of the surface of the heating body facing the flat cable is brought into contact with the first protrusion.

In the manufacturing method according to the seventeenth aspect, the first inclined surface of the heating body promotes the flow of the molten thermoplastic resin in the width direction of the flat cable.

In accordance with an eighteenth aspect, in the manufacturing method according to the fifteenth or sixteenth aspect, bringing the heating body into contact with the first protrusion includes moving the heating body in a first direction substantially perpendicular to the mounting surface. The heating body abuts against the first protrusion so that a first region of the first protrusion overlapping the heating body is surrounded by a second region of the first protrusion not overlapping the heating body and a region occupied by the flat cable when the heating body is viewed in the first direction in a state where the flat cable is disposed on the mounting surface in contact with the first protrusion.

In the manufacturing method according to the eighteenth aspect, the first protrusion present in the second region suppresses the flow of the molten thermoplastic resin in the length direction of the flat cable and promotes the flow of the molten thermoplastic resin in the width direction of the flat cable.

In accordance with the nineteenth aspect, in the manufacturing method according to the eighteenth aspect, when the heating body is viewed in the third direction in which the flat cable extends in a state where the flat cable is disposed on the mounting surface in contact with the first protrusion, the first inclined surface of the heating body inclined so as to be separated from the mounting surface in the first direction as it goes from the first outer end of the heating body facing the first protrusion in the first direction toward the center of the surface of the heating body facing the flat cable is brought into contact with the first protrusion.

In the manufacturing method according to the nineteenth aspect, the first inclined surface of the heating body promotes the flow of the molten thermoplastic resin in the width direction of the flat cable.

In accordance with a twentieth aspect, in the manufacturing method according to any one of the fifteenth to nineteenth aspects, the providing of the first protrusion includes providing the first protrusion having a first notch recessed in a second direction in which the at least two bus bars are arranged.

In the manufacturing method according to the twentieth aspect, the first protrusion is inclined toward the flat cable by the first notch, thereby facilitating the flow of the molten thermoplastic resin in the width direction of the flat cable.

According to the twenty first aspect, the method of manufacturing the cable assembly includes providing a flat cable including at least two conductive core wires and a covering material that partially covers the at least two core wires and has electrical insulation properties. The manufacturing method includes providing a base having a mounting surface and providing a first protrusion made of a thermoplastic material on the mounting surface. The manufacturing method includes disposing the flat cable on the mounting surface so as to abut against the first protrusion. The manufacturing method includes melting the thermoplastic material by bringing the heating body into contact with the first protrusion while moving the heating body in a first direction substantially perpendicular to the mounting surface, and providing the melted thermoplastic material on the covering material. The manufacturing method includes solidifying the molten thermoplastic material to secure the flat cable to the base. The heating body abuts against the first protrusion so that a first region overlapping the heating body is surrounded by a second region of the first protrusion not overlapping the heating body and a region occupied by the flat cable when the heating body is viewed in the first direction in a state where the flat cable is disposed on the mounting surface in contact with the first protrusion.

In the manufacturing method according to the twenty first aspect, the cable assembly is provided in which the first protrusion present in the second region suppresses the flow of the molten thermoplastic resin in the lengthwise direction of the flat cable and promotes the flow of the molten thermoplastic resin in the widthwise direction of the flat cable.

In accordance with the twenty second aspect, in the manufacturing method according to the twentieth aspect, the providing of the base includes providing the base having a first recess in a surface opposite to the mounting surface in the first direction. Providing the first protrusion on the mounting surface includes providing the first protrusion such that the center of the first recess in the second direction in which the at least two core wires are arranged when the flat cable is fixed to the mounting surface is located between the first core wire closest to the first protrusion among the at least two core wires in the second direction and the center of the first protrusion in the second direction.

In the manufacturing method according to the twenty second aspect, when the first protrusion is heated, the thin portion forming the bottom portion of the first recess in the connector housing is bent by the heating, and thus the first protrusion is inclined toward the flat cable. This further promotes the flow of the molten thermoplastic resin in the width direction of the flat cable, and thus the flat cable can be fixed to the mounting surface more strongly.

In accordance with a twenty third aspect, in the manufacturing method according to the twenty first or twenty second aspect, providing of the first protrusion includes providing the first protrusion having a first notch recessed in the second direction, and disposing the flat cable so as to abut on the first protrusion includes disposing the at least two core wires so as to be arranged in the second direction.

In the manufacturing method according to the twenty third aspect, the first protrusion is inclined toward the flat cable by the first notch, thereby facilitating the flow of the molten thermoplastic resin in the width direction of the flat cable.

### [Effects of the Invention]

According to the technique disclosed in the present application, it is possible to provide a technique capable of suppressing warpage of the end portion of the flat cable in the width direction and easily fixing the flat cable to the connector with high accuracy when the flat cable is connected to the connector.

### Brief Description of the Drawings

FIG. 1 is a perspective view of a rotary connector device according to an embodiment.
FIG. 2 is an exploded perspective view of a motor in which a rotator is removed from a stator and a holding member is removed from a connector.
FIG. 3 is a side view of the holding member for illustrating connection of the flat cable.
FIG. 4 is a perspective view of the rotator for illustrating attachment of the holding member.
FIG. 5 is an enlarged view of the cable assembly 44A according to the first embodiment.
FIG. 6 is a cross-sectional view of the cable assembly 44A taken along line VI-VI of FIG. 5.
FIG. 7 is a diagram showing a method of forming a first bonding member and a second bonding member according to the first embodiment.
FIG. 8 is a flowchart showing a method of forming the first bonding member and the second bonding member according to the first embodiment.
FIG. 9 is a diagram showing a first modification of the method of forming the first bonding member and the second bonding member according to the first embodiment.
FIG. 10 is a view showing a second modification of the method of forming the first bonding member and the second bonding member according to the first embodiment.
FIG. 11 is a diagram showing a third modification of the method of forming the first bonding member and the second bonding member according to the first embodiment.
FIG. 12 is a cross-sectional view of the cable assembly 44A taken along line VI-VI in FIG. 5 when the first bonding member and the second bonding member are formed in the third modification.
FIG. 13 is a diagram showing a fourth modification of the method of forming the first bonding member and the second bonding member according to the first embodiment.
FIG. 14 is an enlarged view of a cable assembly according to a fourth modification.
FIG. 15 is an enlarged view of a cable assembly according to a second embodiment.
FIG. 16 is a cross-sectional view of the cable assembly taken along line XVI-XVI of FIG. 15.
FIG. 17 is a view showing a method of forming the first bonding member and the second bonding member according to the second embodiment.
FIG. 18 is a flowchart showing a method of forming the first bonding member and the second bonding member according to the second embodiment.
FIG. 19 is a cross-sectional view of the cable assembly taken along line XVI-XVI in FIG. 15 in the case where the first bonding member and the second bonding member according to the second embodiment are formed in a second modification.
FIG. 20 is an enlarged view of a cable assembly according to a third embodiment.
FIG. 21 is a cross-sectional view of the cable assembly taken along line XXI-XXI in FIG. 21.
FIG. 22 is a diagram showing a method of forming the first bonding member and the second bonding member according to the third embodiment.
FIG. 23 is a flowchart showing a method of forming the first bonding member and the second bonding member according to the third embodiment.
FIG. 24 is a cross-sectional view of the cable assembly taken along line XXI-XXI of FIG. 21 in the case where the first bonding member and the second bonding member according to the third embodiment are formed in a second modification.

### DETAILED DESCRIPTION OF THE INVENTION

Hereinafter, embodiments will be described with reference to the drawings. In the drawings, the same reference numerals indicate corresponding or identical configurations.

### First Embodiment

### <Overview of Rotary Connector Device>

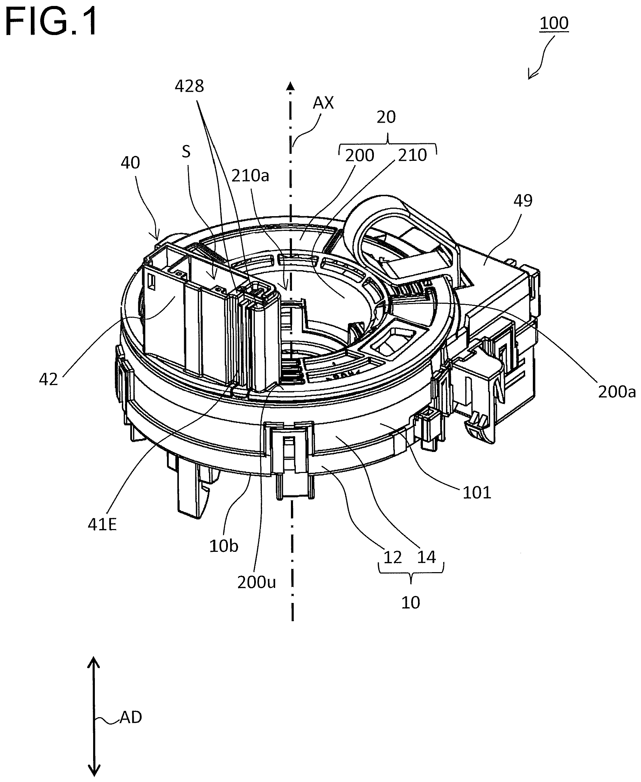

FIG. 1 is a perspective view of a rotary connector device 100 according to an embodiment.

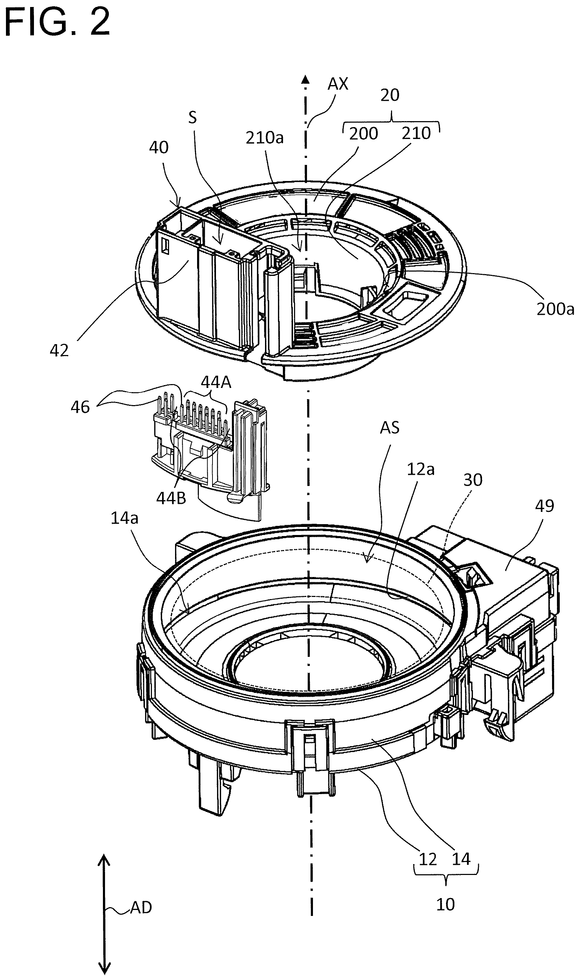

FIG. 2 is an exploded perspective view in which the rotator 20 is removed from the stator 10 and the holding member 48 is removed from the connector assembly 40.

As shown in FIGS. 1 and 2, the rotary connector device 100 includes a stator 10 and a rotator 20. The rotator 20 is rotatable about the rotation axis AX with respect to the stator 10. The stator 10 is configured to be mounted to a vehicle body. The rotator 20 is configured to be coupled to a steering wheel. In a state where the stator 10 and the rotator 20 are assembled to the rotator 20, a housing space AS is defined between the stator 10 and the rotator 20.

As shown by the dotted line in FIG. 2, the rotary connector device 100 includes a flat cable 30 as electric cable The flat cable 30 has flexibility. The flat cable 30 is disposed in the housing space AS. The flat cable 30 constitutes a transmission path between the stator 10 and the rotator 20.

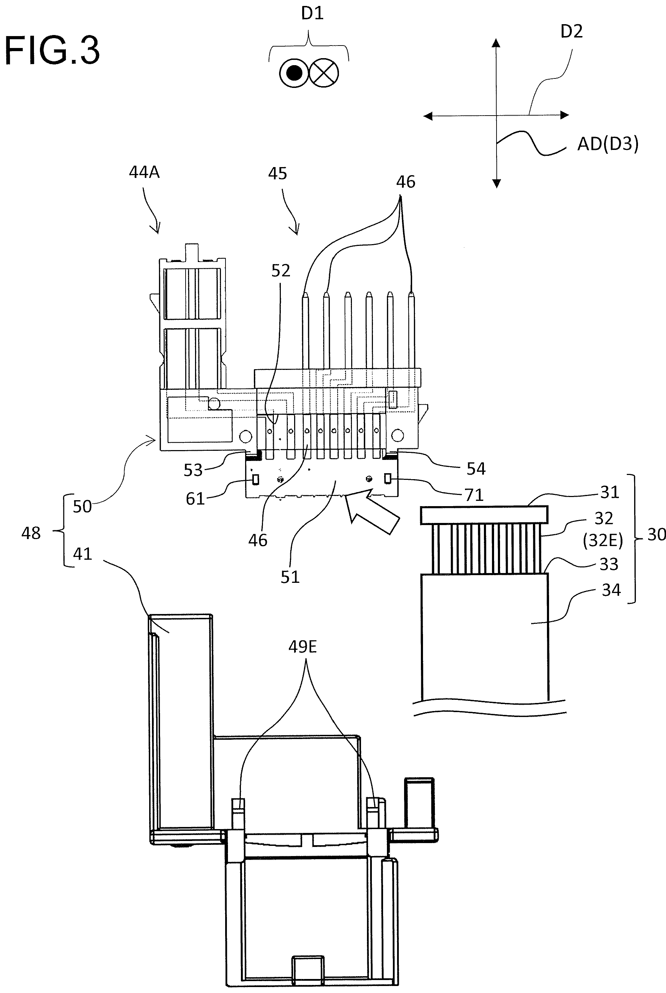

The flat cable 30 includes at least two core wires 32 and a covering material 34. The at least two core wires 32 has electrically conductivity. The covering material 34 has electrical insulation properties and partially covers at least two core wires 32. As shown in FIG. 3, the covering material 34 of the flat cable 30 has a cutout 33 for exposing the exposed portions 32E of at least two core wires 32 near the distal end (cable end 31) in the length direction of the flat cable 30.

One end of the flat cable 30 is electrically connected to an electric device (for example, a switch) provided in the steering wheel. The other end of the flat cable 30 is electrically connected to an electric device and a power supply provided in a main body of a moving body such as an automobile. Accordingly, the rotary connector device 100 transmits and receives electric power or an electric signal between an electric device provided in the main body of the moving body and an electric device provided in the steering wheel. However, the rotary connector device 100 may be used for other than the moving body.

### <Configuration of Stator>

As shown in FIGS. 1 and 2, the stator 10 includes a first stator portion 12 and a second stator portion 14. The second stator portion 14 is coupled to the first stator portion 12 in a state of being disposed on the first stator portion 12. The first stator portion 12 constitutes a bottom 10b of the stator 10. The first stator portion 12 constitutes a bottom 10b of the stator 10.

As shown in FIG. 2, the first stator portion 12 has a ring shape when the rotary connector device 100 is viewed in an axial direction AD substantially parallel to the rotation axis AX. The first stator portion 12 is disposed such that the rotation axis AX passes through the center of the first stator portion 12. The second stator portion 14 has a tubular shape in which the hollow portion 14a of the second stator portion 14 extends in the axial direction AD. The second stator portion 14 extends upward from the outer peripheral portion 12a of the first stator portion 12 in the axial direction AD.

### <Configuration of Rotator>

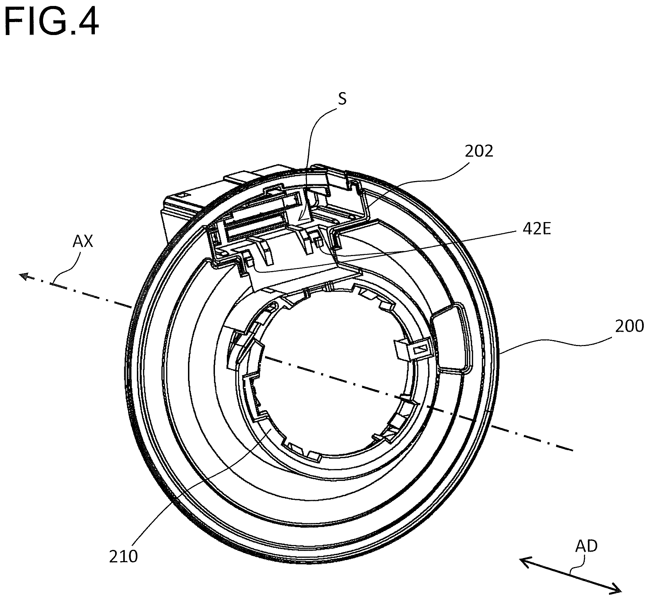

The rotator 20 includes an annular member 200 and an inner peripheral tubular portion 210. The annular member 200 has a ring shape when the rotary connector device 100 is viewed in the axial direction AD. The annular member 200 has an opening 202 (see FIG. 4) through which the flat cable 30 passes. The annular member 200 is disposed such that the rotation axis AX passes through the center of the annular member 200. The inner peripheral tubular portion 210 is disposed such that the hollow portion 210a of the inner peripheral tubular portion 210 extends in the axial direction AD. The inner peripheral tubular portion 210 extends downward from the inner peripheral 200a of the annular member 200 along the axial direction AD. The inner peripheral tubular portion 210 is disposed inside the cylindrical second stator portion 14 in the radial direction of the rotation axis AX. Thus, the housing space AS in which the flat cable 30 is disposed is defined by the first stator portion 12, the second stator portion 14, the annular member 200, and the inner peripheral tubular portion 210. In other words, the housing space AS in which the flat cable 30 is disposed is equal to a space obtained by subtracting the hollow portion 14a of the inner peripheral tubular portion 210 from the hollow portion 210a of the second stator portion 14.

In the present embodiment, the inner peripheral tubular portion 210 is provided in the rotator 20. However, the inner peripheral tubular portion 210 may be provided in the stator 10 to define the housing space AS. In addition, in the present embodiment, the rotary connector device 100 has a shape having a hollow portion 210a, but the rotary connector device 100 may not have the hollow portion 210a.

### <Configuration of Connector>

As shown in FIG. 1, the rotary connector device 100 includes a connector assembly 40 on the rotator 20 side and a connector assembly 49 on the stator 10 side.

The connector assembly 40 is connected to the rotator 20. The connector assembly 40 includes a cover 42 and cable assembly 44A, 44B. The cover 42 extends upward from the annular member 200 toward the axial direction AD. The cover 42 has a space S therein. The space S is open upward in the axial direction AD. The opening 202 (see FIG. 4) of the annular member 200 opens the space S on the lower side in the axial direction AD. The cable assemblies 44A and 44B are disposed in the space S in a state of being combined as illustrated in FIG. 2. That is, the cable assemblies 44A and 44B are partially covered with the cover 42. The cable assembly 44A, 44B is connected to at least two core wires 32 of the flat cable via at least two bus bars 46. The at least two bus bars 46 and the at least two core wires 32 are electrically connected to each other by, for example, resistance welding, ultrasonic welding, or the like.

As shown in FIG. 1, the connector assembly 49 on the stator 10 side is connected to the stator 10. In the present embodiment, the connector assembly 49 is disposed outside the stator 10 in the radial direction of the rotation axis AX, but the connector assembly 49 may be disposed below the stator 10 in the axial direction AD. The connector assembly 49 has a bus bar electrically connected to at least two core wires 32 of the flat cable 30.

### <Configuration of Holding Member>

FIG. 3 is a side view of the holding member 48 for explaining the connection of the flat cable 30. However, FIG. 3 illustrates a side surface of the holding member 48 in a state where the connector housing 50 is removed from the connector base 41. Although the cable assembly 44A is illustrated as an example in FIG. 3, the cable assembly 44A has substantially the same configuration except that the number of bus bars 46 is different. In the connector assembly 40, a connector constituting the cable assembly 44A is referred to as a connector 45. The cable assembly 44A includes a connector 45. In the following description, the connector 45 is described as a connector connected to the rotator 20, but a connector connected to the connector assembly 49 on the stator 10 side may also have the same structure.

The connector 45 includes at least two bus bars 46 for electrical connection with at least two core wires 32 of the flat cable 30. The at least two bus bars 46 are electrically conductive.

The connector 45 includes a holding member 48 for holding at least two bus bars 46. The holding member 48 includes a connector base 41 and a connector housing 50. The connector base 41 and the connector housing 50 are detachable. The connector housing 50 has electrical insulation properties and partially covers at least two bus bars 46. The at least two bus bars 46 extend from the connector housing 50 in the axial direction AD. At least two bus bars 46 are exposed from connector housing 50 in a direction substantially orthogonal to axial direction AD. In the following embodiments, a direction substantially orthogonal to the axial direction AD may be referred to as a first direction D1, and the axial direction AD may be referred to as a third direction D3.

As shown in FIG. 3, the connector housing 50 includes a mounting surface 51 on which the flat cable 30 is mounted, a body wall 52 that extends in the second direction D2 and against which the cable end 31 of the flat cable 30 can abut, a first protruding portion 53 that protrudes in the second direction D2 and against which the covering material 34 of the flat cable 30 can abut, and a second protruding portion 54 that protrudes in the second direction D2 and against which the covering material 34 of the flat cable 30 can abut. The first direction D1 is substantially perpendicular to the mounting surface 51. In a state where the connector housing 50 is detached from the connector base 41, the at least two bus bars 46 are connected to the at least two core wires 32 of the flat cable 30. The connector housing 50 is mounted on the connector base 41 in a state where at least two core wires 32 of the flat cable 30 are connected to the connector housing 50. The connector base 41 is attached to the connector 45 in the space S in a state where the connector housing 50 is mounted. Accordingly, at least two bus bars 46 are disposed in the space S.

To be more specific, the connector base 41 of the holding member 48 has a fitting portion 49E. As shown in FIG. 4, the cover 42 has a fitted portion 42E provided in the space S. The holding member 48 is attached to the cover 42 in the space S by fitting the fitting portion 49E to the fitted portion 42E along the axial direction AD. However, the attachment of the holding member 48 to the cover 42 is not limited to this structure. The connector base 41 has an exposed portions 41E (see FIG. 1) exposed to the outside of the space S in a state where the holding member 48 is attached to the cover 42.

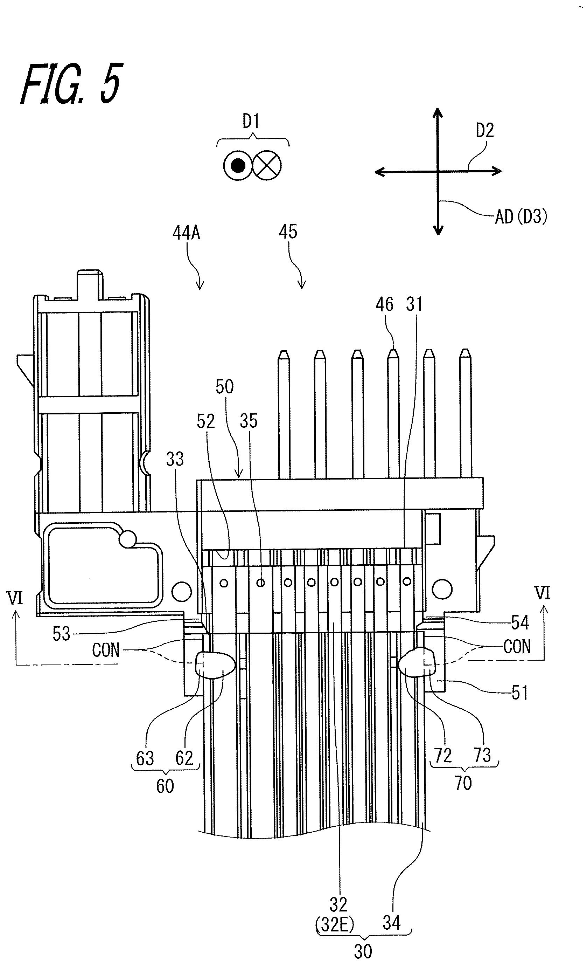

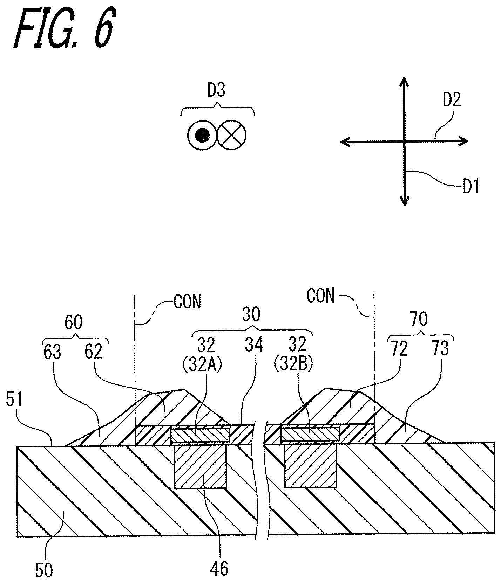

Referring to FIGS. 5 and 6, the cable assembly 44A further includes a first bonding member 60 formed of a thermoplastic resin provided on the mounting surface 51. The first bonding member 60 couples the covering material 34 and the connector housing 50 to each other so as to suppress movement of the flat cable 30 with respect to the connector 45. The first bonding member 60 includes a first portion 62 and a second portion 63. The first portion 62 is provided inside the contour CON of the covering material 34 when viewed from the first direction D1. The second portion 63 extends from the first portion 62 and is provided outside the contour CON when viewed from the first direction D1. The first portion 62 has a first projected area (area of the first portion 62 shown in FIG. 5) as defined inside of the contour CON when viewed from the first direction D1. The second portion 63 has a second projected area (area of the second portion 63 shown in FIG. 5) defined outside the contour when viewed from the first direction D1. The first projected area is larger than the second projected area.

Referring still to FIG. 5, the cable assembly 44A further includes a second bonding member 70 made of a thermoplastic resin. The second bonding member 70 couples the covering material 34 and the connector housing 50 to each other so as to suppress movement of the flat cable 30 relative to the connector 45, on the opposite side of the first bonding member 60 relative to the flat cable 30 in the second direction D2. The second bonding member 70 includes a third portion 72 and a fourth portion 73. The third portion 72 is provided inside the contour CON when viewed from the first direction D1. The fourth portion 73 extends from the third portion 72 and is provided outside the contour CON when viewed from the first direction D1. The third portion 72 has a third projected area (area of the third portion 72 shown in FIG. 5) defined inside the contour CON when viewed from the first direction D1. The fourth portion 73 has a fourth projected area (area of the fourth portion 73 shown in FIG. 5) defined outside the contour CON when viewed from the first direction D1. The third projected area is larger than the fourth projected area.

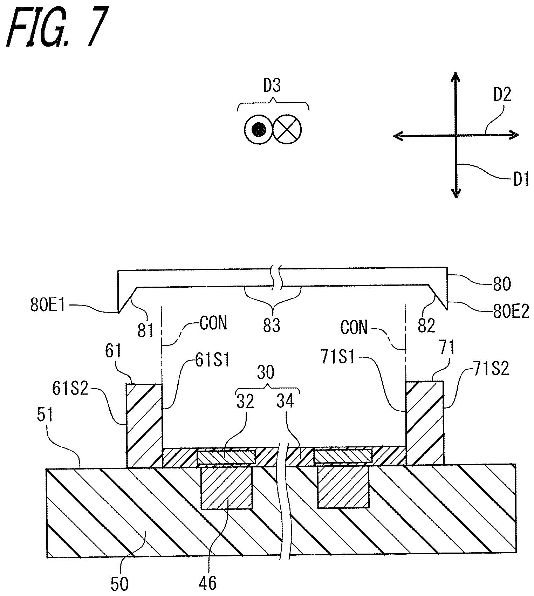

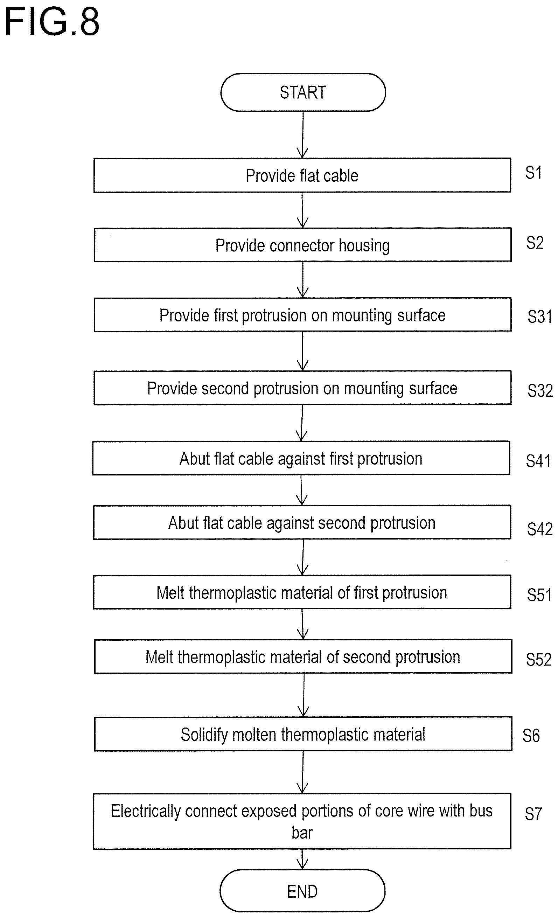

Referring to FIGS. 7 and 8, the first bonding member 60 and the second bonding member 70 are formed as follows. In step S1 of FIG. 8, a flat cable 30 is provided that includes at least two conductive core wires 32 and a covering material 34 that is electrically insulating and partially covers the at least two core wires 32. In step S2 of FIG. 8, a connector 45 is provided that includes at least two electrically conductive bus bars 46 and a connector housing 50 having electrically insulation property and partially covers the at least two bus bars 46.

In step S31 of FIG. 8, as shown in FIG. 7, the first protrusion 61 made of the thermoplastic material is provided on the mounting surface 51 of the connector housing 50. In step S32 of FIG. 8, as shown in FIG. 7, the second protrusion 71 made of the thermoplastic material is provided on the mounting surface 51 of the connector housing 50. The first protrusion 61 and the second protrusion 71 are preferably equal to or less than the lateral dimension of the flat cable 30 (dimension of the second direction D2 in FIG. 5) in order to align the orientation of the flat cable 30. In addition, when the first protrusion 61 and the second protrusion 71 are equal to or less than the lateral width of the flat cable 30, it is possible to efficiently suppress the warpage of the flat cable 30 in the vicinity of the contour CON when the flat cable 30 is connected to the connector 45. The first protrusion 61 and the second protrusion 71 may be formed integrally with the connector housing 50. That is, in the step S2, the connector housing 50 having the first protrusion 61 and the second protrusion 71 on the mounting surface 51 may be provided, and in this case, the step S2 and the step S31 are executed at the same time as the step S32 is executed.

Next, in step S41 of FIG. 8, as shown in FIG. 7, the flat cable 30 is disposed on the mounting surface 51 in contact with the first protrusion 61. In step S42 of FIG. 8, as shown in FIG. 7, the flat cable 30 is disposed on the mounting surface 51 in contact with the second protrusion 71. At this time, as shown in FIG. 5, the cable end 31 of the flat cable 30 is brought into contact with the body wall 52. The covering material 34 of the flat cable 30 is in contact with the first protruding portion 53. The covering material 34 of the flat cable 30 is in contact with the second protruding portion 54. At this time, the first protruding portion 53 protrudes in the second direction D2 toward the exposed portions 32E of the at least two core wires 32 in the cutout 33. The second protruding portion 54 protrudes in the second direction D2 toward the exposed portions 32E of the at least two core wires 32 in the cutout 33 on the opposite side of the first protruding portion 53 in the second direction D2.

In the following description, the inner surface of the first protrusion, which is in contact with the contour CON of the flat cable 30, is referred to as a first protrusion, and the surface of the first protrusion 61 opposite to the first protrusion inner surface 61S1 in the second direction D2 is referred to as a first protrusion outer surface 61S2. The inner surface of the second protrusion 71 that abuts against the contour CON of the flat cable 30 is referred to as a second protrusion inner surface 71S1, and the surface of the second protrusion 71 opposite to the second protrusion inner surface 71S1 in the second direction D2 is referred to as a second protrusion outer surface 71S2.

In step S51 of FIG. 8, as shown in FIG. 7, the heating body 80 is abuts against the first protrusion 61 to melt the thermoplastic material of the first protrusion 61. More specifically, the first inclined surface 81 of the heating body 80 is brought into contact with the first protrusion 61 to melt the thermoplastic material of the first protrusion 61. The molten thermoplastic material flows over the covering material 34. As a result, the molten thermoplastic material is provided on the covering material 34. In step S52 of FIG. 8, as shown in FIG. 7, the heating body 80 is abutted against the second protrusion 71 to melt the thermoplastic material of the second protrusion 71. More specifically, the second inclined surface 82 of the heating body 80 is brought into contact with the second protrusion 71 to melt the thermoplastic material of the second protrusion 71. The molten thermoplastic material flows over the covering material 34. As a result, the molten thermoplastic material is provided on the covering material 34. The heating body 80 may be a hot plate or an ultrasonic horn.

The heating body 80 is configured such that, when viewing the heating body in the third direction D3 in which the flat cable 30 extends in a state where the heating body 80 is disposed on the mounting surface 51 in contact with the mounting surface 51, the first inclined surface 81 facing the mounting surface 51 of the heating body 80 is inclined so as to be separated from the mounting surface 51 in the first direction D1 as it goes from the first outer end 80E1 facing the first protrusion 61 in the first direction D1 toward the surface center 83 facing the flat cable 30. The heating body 80 is disposed such that the first outer end 80E1 is located outside of the first protrusion outer surface 61S2 in the second direction D2. That is, the heating body 80 is disposed such that the first protrusion outer surface 61S2 is located between the first outer end 80E1 and the first protrusion inner surface 61S1 in the second direction D2.

Similarly, in a state where the flat cable 30 is disposed on the mounting surface 51 in contact with the second protrusion 71, the second inclined surface 82 facing the mounting surface 51 of the heating body 80 is inclined so as to be separated from the mounting surface 51 at the first direction D1 as it goes from the second outer end 80E2 portion facing the second protrusion 71 in the first direction D1 toward the surface center 83 facing the flat cable 30. The heating body 80 is disposed such that the second outer end 80E2 is located outside of the second protrusion outer surface 71S2 in the second direction D2. That is, the heating body 80 is disposed such that the second protrusion outer surface 71S2 is located between the second outer end 80E2 and the second protrusion inner surface 71S1 in the second direction D2.

The heating body 80 is moved in the first direction D1 when the heating body 80 is abutted against the first protrusion 61 and the second protrusion 71. As a result, the molten thermoplastic material flows inside the heating body 80, and therefore, more thermoplastic material is caused to flow onto the covering material 34.

In step S6 of FIG. 8, the melted thermoplastic material is solidified to form the first bonding member 60 and the second bonding member 70. The solidification includes any one of leaving the molten thermoplastic material at room temperature to solidify the molten thermoplastic material and cooling the molten thermoplastic material to solidify the molten thermoplastic material. As a result, the flat cable 30 is fixed to the mounting surface 51. The first bonding member 60 and the second bonding member 70 are thus unshaped as they are formed by the melting of the thermoplastic material. The term "not molded" is not formed by a mold or die, and have a distorted shape that deviates from a typical shape formed by the mold or the die when the first bonding member 60 and the second bonding member 70 are viewed from the first direction.

Thereafter, in step S7 of FIG. 8, the exposed portions 32E of the at least two core wires 32 exposed from the covering material 34 is electrically connected to the at least two bus bars 46, respectively. The at least two core wires 32 and the at least two bus bars 46 are electrically connected to each other at the coupling portion 35 by resistance welding, ultrasonic welding, or the like.

In the above-described flowchart, step S7 in FIG. 8 may be performed before steps S51 and S52 in FIG. 8. If possible, they may be performed simultaneously. In this case, in a state where the at least two bus bars 46 and the at least two core wires 32 of the flat cable 30 are welded, even when a force to peel off the flat cable 30 is unexpectedly applied from the welded portion, the first bonding member 60 and the second bonding member 70 prevent the at least two core wires 32 of the flat cable 30 from being peeled off from the at least two bus bars 46.

### First Modification

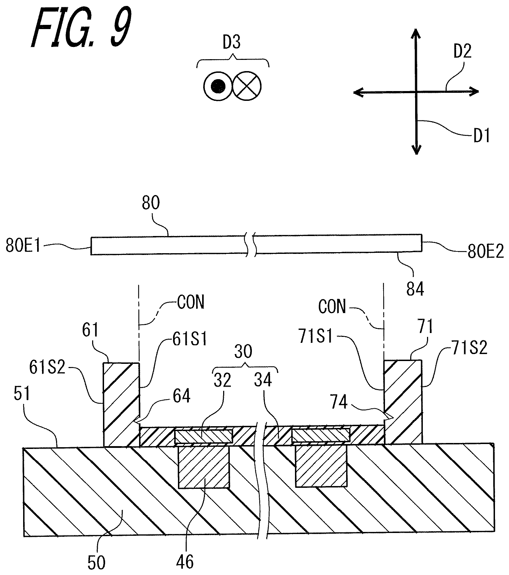

The shapes of the first protrusion 61, the second protrusion 71, and the heating body 80 are not limited to the shapes illustrated in FIG. 7. As shown in FIG. 9, the first protrusion 61 may have a first notch recessed in the second direction D2 on the first protrusion inner surface 61S1. The second protrusion 71 may have a second notch 74 recessed in the second direction D2 on the second protrusion inner surface 71S1. At this time, the method of forming the first bonding member 60 and the second bonding member 70 according to the present modification includes providing the first protrusion 61 having the first notch 64 on the mounting surface 51 at the step S31, and providing the second protrusion 71 having the first notch 64 on the mounting surface 51 at the step S32. The heating body 80 may have a flat surface 84 without having the first inclined surface 81 and the second inclined surface 82. The flat surface 84 being flat means that the normal direction of the flat surface 84 is the first direction D1. In this case, when the heating body 80 is brought into contact with the first protrusion 61, the first protrusion 61 is inclined toward the flat cable 30 by the first notch 64, and thus, the molten thermoplastic material flows more on the covering material 34, and the same effect as that of the forming method of FIG. 7 is obtained. When the heating body 80 is brought into contact with the second protrusion 71, the second protrusion 71 is inclined toward the flat cable 30 by the second notch 74, and thus, the molten thermoplastic material flows more on the covering material 34, and the same effect as that of the forming method of FIG. 7 is obtained. When the heating body 80 is brought into contact with the second protrusion 81, the second protrusion 82 is inclined toward the flat cable 7 by the second notch 74, and thus, the molten thermoplastic material flows more on the covering material 34, and the same effect as that of the forming method of FIG. 7 is obtained.

### Second Modification

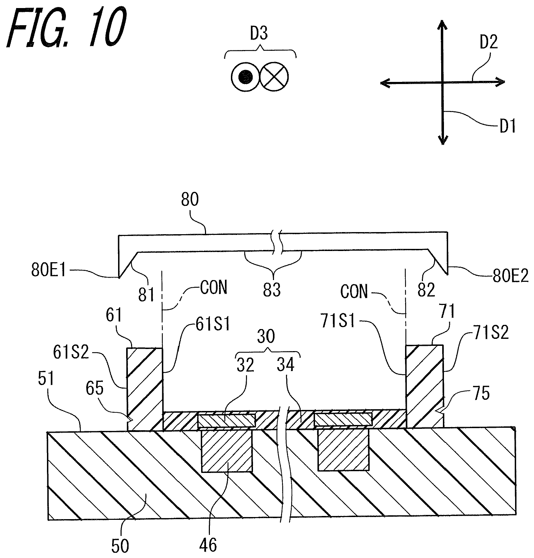

Alternatively, as shown in FIG. 10, even when the shape of the heating body 80 is the shape shown in FIG. 7, the first protrusion 61 may have a first notch 65 recessed in the second direction D2 of the first protrusion outer surface 61S2. The second protrusion 71 may have a second notch 75 recessed in the second direction D2 of the second protrusion outer surface 71S2. Alternatively, in addition to the notches of the first modification, the first protrusion 61 may have a first notch 65, and the second protrusion 71 may have a second notch 75. At this time, the method of forming the first bonding member 60 and the second bonding member 70 according to the present modification includes providing the first protrusion 61 having the first notch 65 on the mounting surface 51 at the step S31, and providing the second protrusion 71 having the first notch 65 on the mounting surface 51 at the step S32. The method includes disposing the flat cable 30 so that at least two core wires 32 are arranged in the second direction D2 in the step S42 part and the step D2 part.

In this case, when the heating body 80 is abutted against the first protrusion 61, the first protrusion 61 is pressed by the first inclined surface 81 and inclined toward the flat cable 30 by the first notch 65, and thus the molten thermoplastic material flows more on the covering material 34 than in the forming method of FIG. 7. When the heating body 80 is abutted against the second protrusion 71, the second protrusion 71 is pressed by the second inclined surface 82 and inclined toward the flat cable 30 by the second notch 75, so that the molten thermoplastic material flows more on the covering material 34 than in the forming method of FIG. 7. In this case, the first protrusion 61 may further include the first notch 64 shown in FIG. 9, and the second protrusion 71 may further include the second notch 74 shown in FIG. 9.

### Third Modification

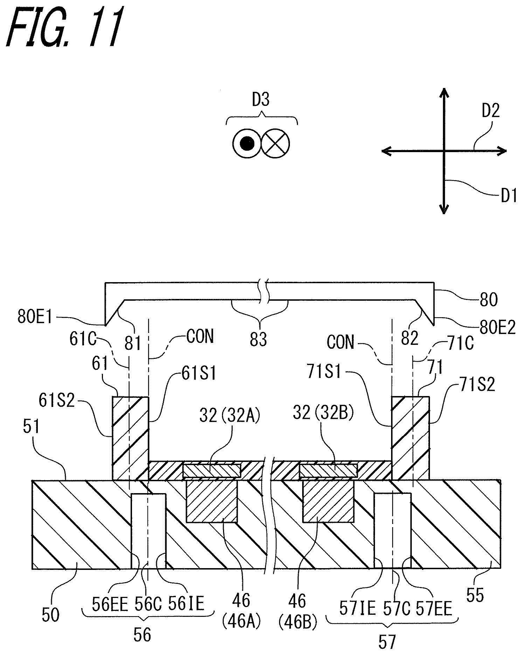

Alternatively, as shown in FIG. 11, the first protrusion 61 may not have the first notches 64, 65, the second protrusion 71 may not have the second notches 74, 75, and the connector housing 50 may have the first recess 56 and the second recess 57 on the mounting surface 51 and the surface 55 opposite to the first direction D1. Alternatively, the connector housing 50 may have the first recess 56 and the second recess 57 in a state where the first protrusion 61 has at least one of the first notches 64, 65 and the second protrusion 71 has at least one of the second notches 74, 75. At this time, the method of forming the first bonding member 60 and the second bonding member 70 according to the present modification includes providing a connector housing 50 having a first recess 56 and a second recess 57 on a surface 55 opposite to a mounting surface 51 in step S2.

In this case, when the flat cable 30 is fixed to the mounting surface 51, the center 5C of the first recess in the second direction D2 where at least two core wires 32 are aligned is located between a first core wire 32A of the at least two core wires 32 closest to the first protrusion 61 and the center 61C of the second direction D2 of the first protrusion 61. Preferably, the inner end 56IE of the first recess 56 in the second direction is located between the first bus bar 46 (or the first core wire 46A) closest to the first protrusion 61 among the at least two bus bars 46 in the second direction D2 and the center 61C of the first protrusion 61 in the second direction D2. More preferably, the inner end 56IE of the first recess 56 is located between the first bus bar 46A (or the first core wire 32A) and the first protrusion inner surface 61S1 in the second direction D2. Preferably, the outer end 56EE of the first recess 56 in the second direction D2 is located between the first protrusion outer surface 61S2 and the first protrusion inner surface 61S1 in the second direction D2. More preferably, the outer end 56EE of the first recess 56 is located between the center 61C of the second direction D2 of the first protrusion 61 and the first protrusion inner surface 61S1 in the second direction D2.

The center 57C of the second recess 57 in the second direction D2 is located between the second core wire 32 closest to the second protrusion 71 in the second direction D2 among the at least two core wires 32 and the center 71C of the second protrusion 71 in the second direction D2 when the flat cable 30 is fixed to the mounting surface 51. Preferably, the inner end 57IE of the second recess 57 in the second direction D2 is located between the second bus bar 46 (or the second core wire 32B) closest to the second protrusion 71 among the at least two bus bars 46 in the second direction D2 and the center 71C of the second protrusion 71 in the second direction D2. More preferably, the inner end 57IE of the second recess 57 is located between the second bus bar 46B (or the second core wire 32B) and the second protrusion inner surface 71S1 in the second direction D2. Preferably, the outer end 57EE of the second recess 57 in the second direction D2 is located between the second protrusion outer surface 71S2 and the second protrusion inner surface 71S1 in the second direction D2. More preferably, the outer end 57EE of the second recess 57 is located between the center 71C of the second direction D2 of the second protrusion 71 and the second protrusion inner surface 71S1 in the second direction D2.

That is, the method of forming the first bonding member 60 and the second bonding member 70 according to the present modification includes providing the first protrusion 61 such that the center 56C of the first recess 56 in the second direction D2 is located between the first core wire 32A and the center 61C of the first protrusion 61 in the second direction D2. Accordingly, when the first protrusion 61 is heated, the first protrusion 61 is inclined toward the flat cable 30 when the thermoplastic material is bent so that the center 56C of the first recess 56 is located at the lowest position, and thus a large amount of the melted thermoplastic material flows on the covering material 34.

Preferably, the forming method includes providing the first protrusion 61 in the step S31, such that an inner end 56IE of the first recess 56 in the second direction D2 is located between the first bus bar 46A (or the first core wire 32A) and a middle of the second direction of the first protrusion 61 in the second direction, and an outer end of the first recess 56 in the second direction D2 is located between the first protrusion outer surface 61S2 and the first protrusion inner surface 61Slin the second direction D2. Since the inner end 56IE is located outside the first bus bar 46A, the thickness of the portion of the connector housing 50 that is reduced by the first recess 56 can be reduced, and the first bus bar 46A that is harder than the connector housing 50 does not suppress deformation. Further, since the outer end 56EE is located between the first protrusion outer surface 61S2 and the first protrusion inner surface 61S1, when the first protrusion 61 is heated, the portion of the connector housing 50 thinned by the first recess 56 is reliably heated and deformed. Accordingly, when the entire portion of the connector housing 50 thinned by the first recess 56 sinks downward during heating of the first protrusion 61, the first protrusion 61 is inclined toward the flat cable 30, so that a large amount of the molten thermoplastic material flows on the covering material 34.

More preferably, the forming method includes providing the first protrusion 61 such that, in the step S31, the inner end 56IE of the first recess 56 is located between the first bus bar 46A (or the first core wire 46A) and the first protrusion inner surface 61S1 in the second direction D2, and the outer end of the first recess 56 is located between the center of the second direction of the first protrusion 61 and the first protrusion inner surface in the second direction. Accordingly, when the first protrusion 61 is heated, the first protrusion 61 is more inclined toward the flat cable 30, and thus a large amount of the molten thermoplastic material flows on the covering material 34.

The method of forming the first bonding member 60 and the second bonding member 70 according to the present modification includes providing the second protrusion 71 such that the center 71C of the second direction D2 of the second recess 57 is located between the second core wire 32B and the center 71C of the second direction D2 of the second protrusion 71 in the second direction D2. Accordingly, when the second protrusion 71 is heated, and the thermoplastic material is bent so that the center 57C of the second recess 57 is located at the lowest position, the second protrusion 71 is inclined toward the flat cable 30, and thus a large amount of the melted thermoplastic material flows on the covering material 34.

Preferably, the forming method includes providing the second protrusion 71 in the step S32 such that the inner end 57IE of the second recess 57 in the second direction D2 is located between the second bus bar 46B (or the second core wire 32B) in the second direction D2 and the middle of the second direction D2 of the second protrusion 71, and the outer end 57EE of the second recess 57 in the second direction D2 is located between the second protrusion outer surface 71S2 and the second protrusion inner surface 71S1 in the second direction D2. Since the inner end 57IE is located outside the second bus bar 46B, the thickness of the portion of the connector housing 50 that is reduced by the second recess 57 can be reduced, and the second bus bar 46B that is harder than the connector housing 50 does not suppress deformation. Further, since the outer end 57EE is located between the second protrusion outer surface 71S2 and the second protrusion inner surface 71S1, when the second protrusion 71 is heated, the portion of the connector housing 50 thinned by the second recess 57 is reliably heated and deformed. Accordingly, when the entire portion of the connector housing 50 thinned by the second recess 57 sinks downward during heating of the second protrusion 71, the second protrusion 71 is inclined toward the flat cable 30, so that a large amount of the molten thermoplastic material flows on the covering material 34.

More preferably, the forming method includes providing the second protrusion 71 such that, in the step S32, the inner end 57IE of the second recess 57 is located between the second bus bar 46B (or the second core wire 32B) and the second protrusion inner surface 71S1 in the second direction D2, and the outer end 57EE of the second recess 57 is located between the center of the second direction D2 of the second protrusion 71 and the second protrusion inner surface 71 in the second direction D2. Accordingly, when the second protrusion 71 is heated, the second protrusion 71 is inclined more greatly toward the flat cable 30, and thus the molten thermoplastic material flows more on the covering material 34.

At this time, the shape of the heating body 80 may have the first inclined surface 81 and the second inclined surface 82 as shown in FIGS. 7 and 10, or may have a flat surface 84 without the first inclined surface 81 and the second inclined surface 82 as shown in FIG. 9. In this case, when the heating body 80 is abutted against the first protrusion 61, the first protrusion 61 is inclined toward the flat cable 30 by the first recess 56, and thus, the molten thermoplastic material flows more on the covering material 34, and the same effect as that of the forming method of FIG. 7 is obtained. When the heating body 80 is abutted against the second protrusion 71, the member (thermoplastic resin) of the connector housing 50 that is thinned by the second recess 57 is bent and the second protrusion 71 is inclined toward the flat cable 30, so that a large amount of the molten thermoplastic material flows on the covering material 34.

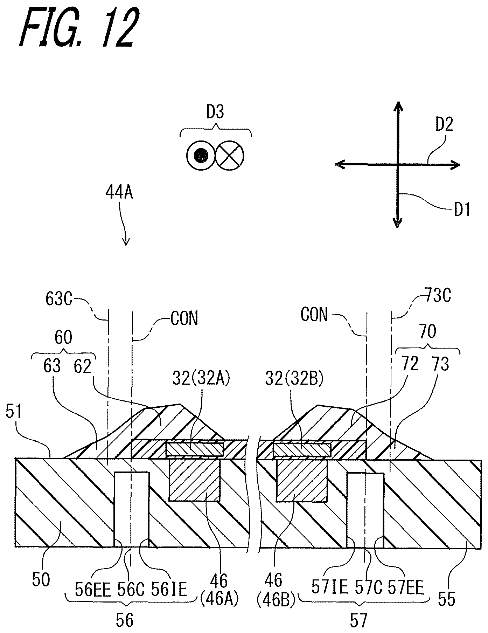

FIG. 12 shows the cross-sectional shapes of the first bonding member 60 and the second bonding member 70 formed in this manner. In this case, the center 56C of the first recess 56 in the second direction D2 perpendicular to the first direction D1 where the two bus bars are aligned is located between the first core wire 32A closest to the second portion 63 among the at least two core wires 32 in the second direction D2 and the center 63C of the second direction D2 of the second portion 63. Preferably, the inner end 56EI of the first recess 56 in the second direction D2 is located between the first bus bar 46A (or the first core wire 32A) closest to the second portion 63 among the at least two bus bars 46 in the second direction D2 and the center 63C of the second portion 63 in the second direction D2. More preferably, the inner end 56IE of the first recess 56 is located between the first bus bar 46A (or the first core wire 32A) and the contour CON of the covering material 34 in the second direction D2. The outer end 56EE of the first recess 56 in the second direction D2 overlaps the second portion 63 when viewed in the first direction D1. More preferably, the outer end 56EE of the first recess 56 is located between the contour CON of the covering material 34 and the center 63C of the second portion 63 in the second direction D2.

The center 57C of the second recess 57 in the second direction is located between the second core wire 32B closest to the fourth portion 73 in the second direction D2 among the at least two core wires 32 and the center 73C of the second direction D2 of the fourth portion 73. Preferably, the inner end 56EI of the first recess 57 in the second direction D2 is located between the first bus bar 46A (or the first core wire 32A) closest to the second portion 73 among the at least two bus bars 46 in the second direction D2 and the center 63C of the second portion 73 in the second direction D2. More preferably, the inner end 57IE of the second recess 57 is located between the second bus bar 46B (or the second core wire 32B) and the contour CON of the covering material 34 in the second direction D2. The outer end 57EE of the second recess 57 in the second direction D2 overlaps the fourth portion 73 when viewed in the first direction D1. More preferably, the outer end 57EE of the second recess 57 is located between the contour CON of the covering material 34 and the center 73C of the fourth portion 73 in the second direction.

### Fourth Modification

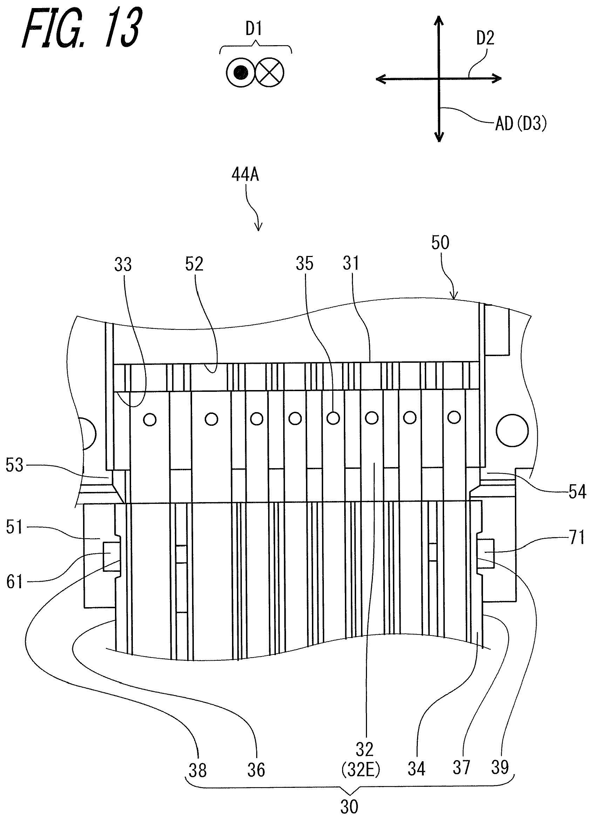

As shown in FIG. 13, the covering material 34 of the flat cable 30 may have a first cover notch 38 that is recessed from a first end 36 of the covering material 34 in the second direction without exposing the at least two core wires 32 on the opposite side of the cable end 31 with respect to the cutout 33. The covering material 34 of the flat cable 30 may have a second cover notch 39 on the opposite side of the cable end 31 with respect to the cutout 33, the second cover notch 39 being recessed from a second end 37 of the covering material 34 opposite to the first end 36 in the second direction D2 without exposing the at least two core wires 32. At this time, the method of forming the first bonding member 60 and the second bonding member 70 according to the present modification includes providing a flat cable including a covering material 34 having a first cover notch 38 and a second cover notch 39 in step S1.

In this case, the first protrusion 61 may be provided on the mounting surface 51 to be engaged with the first cover notch 38, and the second protrusion 71 may be provided on the mounting surface 51 to be engaged with the second cover notch 39. When the first protrusion 61 and the second protrusion 71 are provided in this manner, the flat cable 30 is fixed so as not to move in the length direction (the third direction D3 in FIG. 13) at the steps S41 and S42 described above, and thus the flat cable 30 is easily attached.

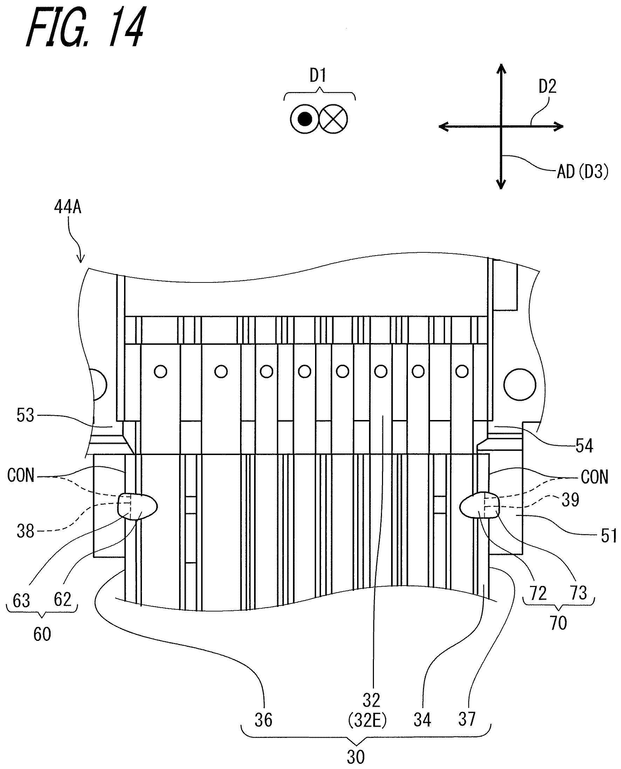

In this case, FIG. 14 illustrates an example of method of forming the first bonding member 60 and the second bonding member 70, or are formed by the method of forming the first bonding member 60 and the second bonding member 70 of FIG. 7 illustrated in at least one aspect of the first to fourth modifications. As shown in FIG. 14, the second portion 63 of the first bonding member 60 is provided to engage with the first cover notch 38. The fourth portion 43 of the second bonding member 70 is provided to engage with the second cover notch 39. Even in such a case, it is desirable that the first projected area described above is larger than the second projected area described above, and the third projected area described above is larger than the fourth projected area described above.

### Second Embodiment

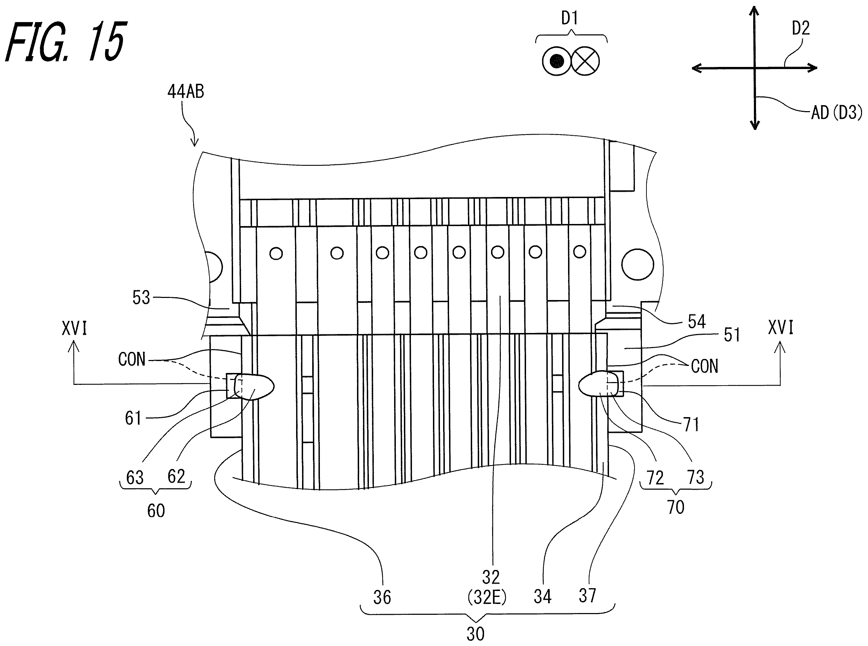

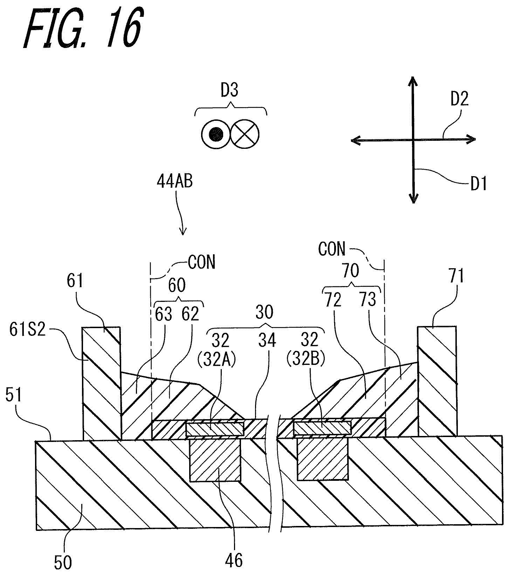

Referring to FIGS. 15 and 16, a cable assembly 44AB according to a second embodiment further includes a first protrusion 61 adjacent to the first bonding member 60 and extending from the mounting surface 51 toward the first direction D1. The second portion 63 of the first bonding member 60 is provided between the first portion 62 of the first bonding member 60 and the first protrusion 61 in the second direction D2. The first bonding member 60 and the first protrusion 61 are made of common thermoplastic material and are directly connected to each other. The cable assembly 44AB further includes a second protrusion 71 adjacent to the second bonding member 70 in the second direction D2 and extending from the mounting surface 51 toward the first direction D1. The fourth portion 73 of the second bonding member 70 is provided between the third portion 72 of the second bonding member 70 and the second protrusion 71 in the second direction D2. The second bonding member 70 and the second protrusion 71 are made of common thermoplastic material and are directly connected to each other. In this case, the first bonding member 60 and the second bonding member 70 have the same features as those shown in the first embodiment.

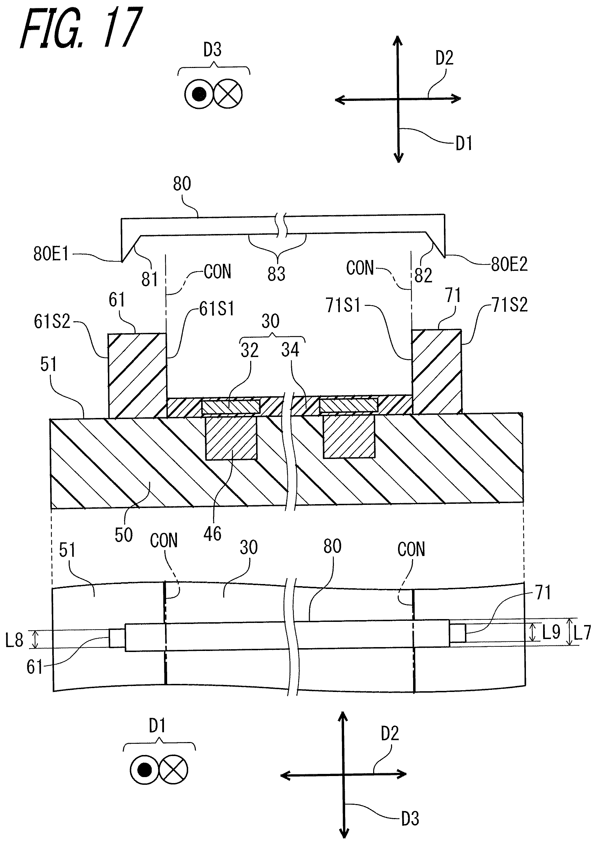

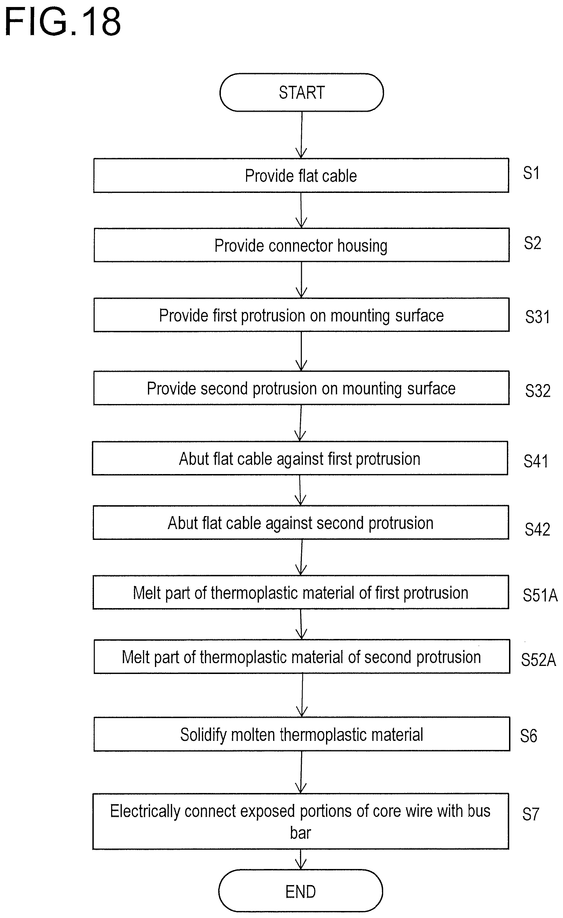

Next, a method of forming the first bonding member 60 and the first protrusion 61 and a method of forming the second bonding member 70 and the second protrusion 71 according to the second embodiment will be described with reference to FIGS. 17 and 18. Since the method of forming the second embodiment is mostly the same as that of the first embodiment, only the differences will be described, and the same steps as those of the first embodiment in FIG. 18 will be denoted by the same reference numerals as those of the first embodiment, and the description thereof will be omitted. As shown in FIG. 17, when the first outer end 80E1 of the heating body 80 is disposed to be located between the first protrusion outer surface 61S2 of the first protrusion 61 and the first protrusion inner surface 61S1 in the second direction D2. The heating body 80 is disposed such that the second outer end 80E2 is located outside of the second protrusion outer surface 71S2 in the second direction D2. The heating body 80 is disposed such that the second outer end 80E2 of the heating body 80 is located between the second protrusion outer surface 71S2 and the second protrusion inner surface 71S1 of the second protrusion 71 in the second direction D2. In steps S41 and S42 of FIG. 18, the heating body 80 is moved to the D1 in the first direction. Therefore, in step S51A of FIG. 18, the heating body 80 is abutted against a part of the first protrusion 61 to melt the thermoplastic material of the first protrusion 61. The molten thermoplastic material flows over the covering 34. As a result, the molten thermoplastic material is provided on the covering material 34. In step S52A of FIG. 8, the heating body 80 is abutted against a part of the second protrusion 71 to melt the thermoplastic material of the second protrusion 71. The molten thermoplastic material flows over the covering 34. As a result, the molten thermoplastic material is provided on the covering material 34. As shown in FIG. 17, the length L7 of the heating body 80 in the third direction D3 is longer than the length L8 of the first protrusion 61 in the third direction, and the length L7 of the heating body 80 in the third direction D3 is longer than the length L9 of the second protrusion 71 in the third direction D3.

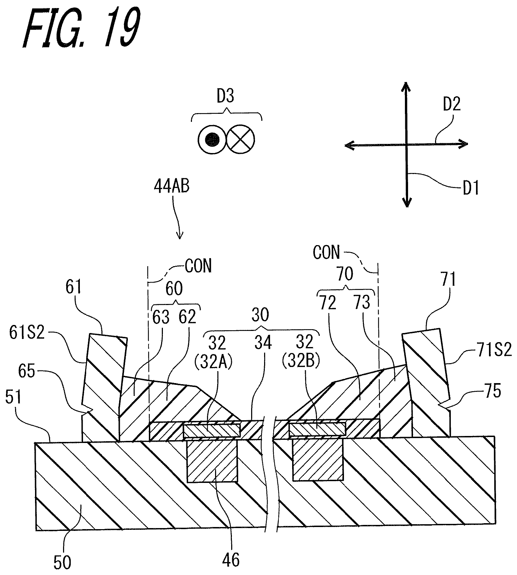

Any of the first to fourth modifications described in the first embodiment may be applied to the method of forming the first bonding member 60 and the first protrusion 61 and the method of forming the second bonding member 70 and the second protrusion 71 according to the second embodiment. In the case where the first bonding member 60 and the first protrusion 61 are formed and the second bonding member 70 and the second protrusion 71 are formed according to the second modification, the first protrusion 61 and the second protrusion 71 may be inclined toward the flat cable 30 as shown in FIG. 19.

### Third Embodiment

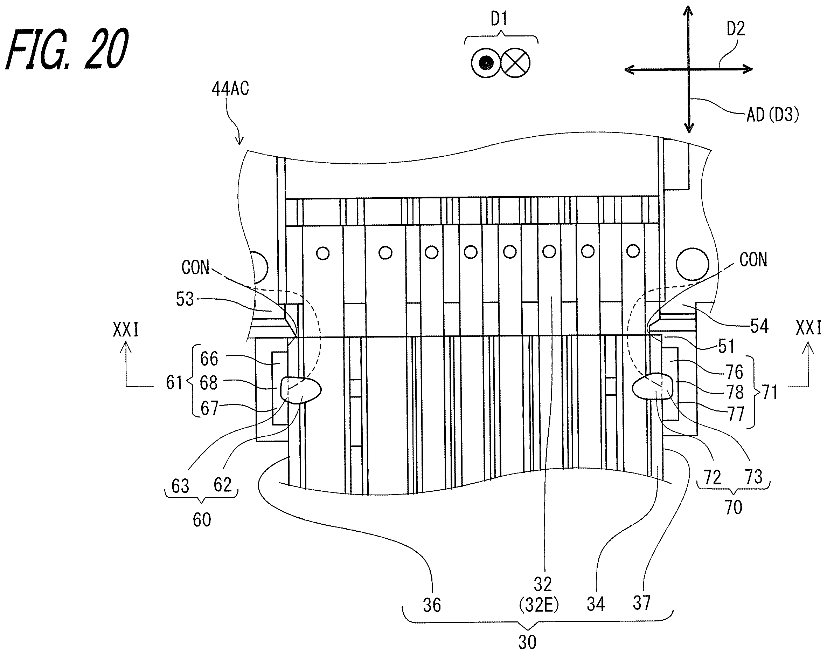

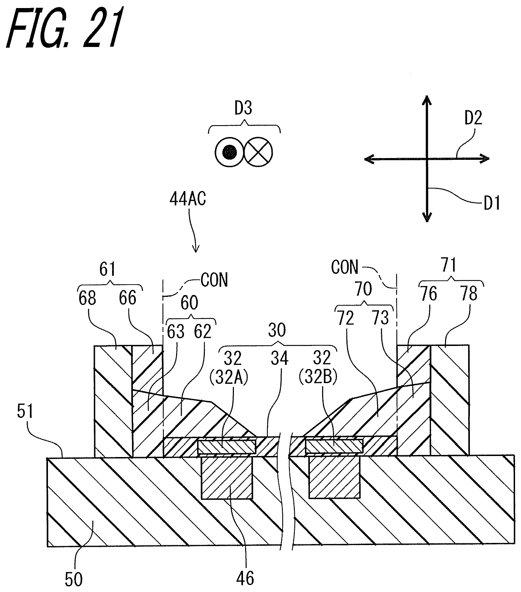

Referring to FIGS. 20 and 21, in the cable assembly 44AC according to the third embodiment, unlike the cable assembly 44AB according to the third embodiment, the first protrusion 61 is formed to surround the first bonding member 60 from three sides, and the second protrusion 71 is formed to surround the second bonding member 70 from three sides. The first protrusion 61 includes a first wall 66, a second wall 67, and a third wall 68. The second protrusion 71 includes a fourth wall 76, a fifth wall 77, and a sixth wall 78. In this case, the first bonding member 60 and the second bonding member 70 have the same features as those shown in the first embodiment.

The first wall 66 and the second wall 67 are capable of abutting against the covering material 34. Referring to FIG. 20, the first wall 66 and the second wall 67 are in contact with the covering material 34. The second wall 67 is provided on the opposite side of the first wall 66 with respect to the first bonding member 60 in the third direction D3. The third wall 68 connects the first wall 66 and the second wall 67. The second portion 63 of the first bonding member 60 is sandwiched between the third wall 68 and the first portion 62 of the first bonding member 60 in the second direction.

The fourth wall 76 and the fifth wall 77 are capable of abutting against the covering material 34. Referring to FIG. 20, the fourth wall 76 and the fifth wall 77 are in contact with the covering material 34. The fifth wall 77 is provided on the opposite side of the fourth wall 76 with respect to the second bonding member 70 in the D3 in the third direction. The sixth wall 78 connects the fourth wall 76 and the fifth wall 77. The fourth portion 73 of the second bonding member 70 is sandwiched between the sixth wall 78 and the third portion 72 of the second bonding member 70 in the second direction D2.

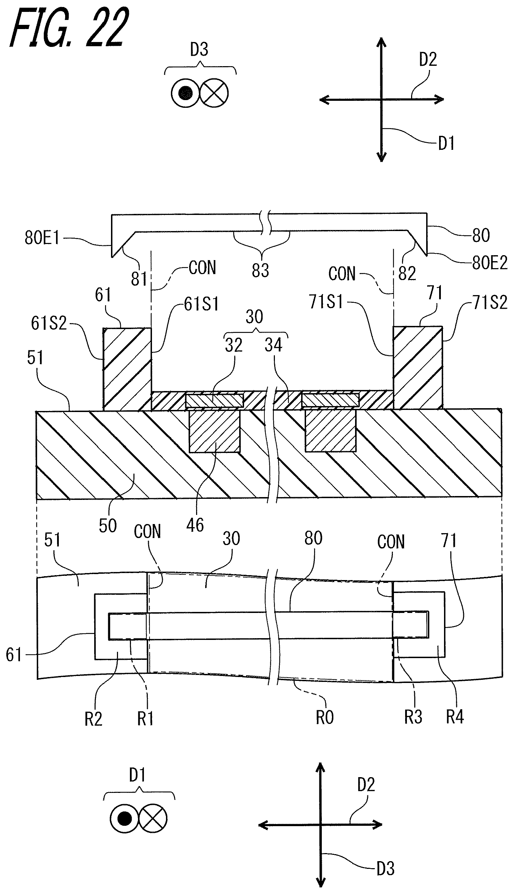

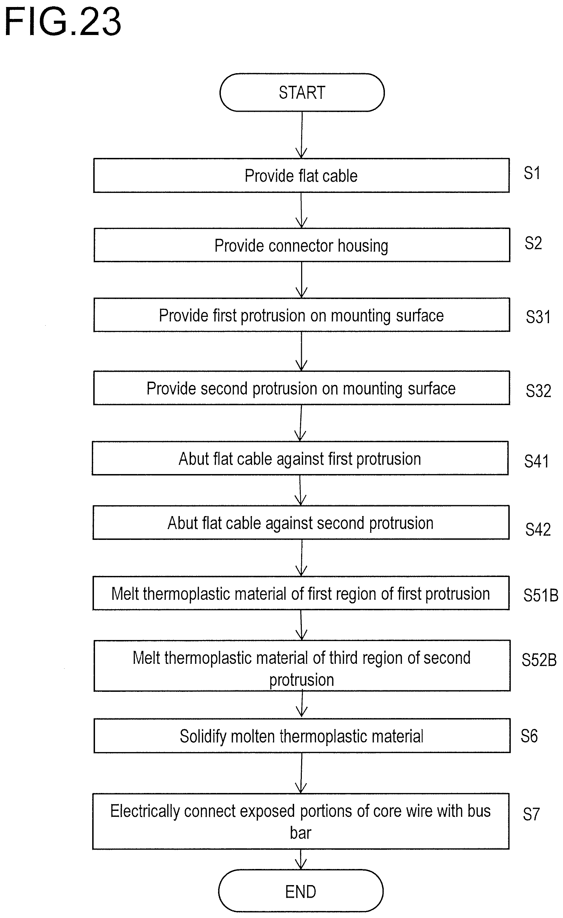

Next, a method of forming the first bonding member 60 and the first protrusion 61 and a method of forming the second bonding member 70 and the second protrusion 71 according to the third embodiment will be described with reference to FIGS. 22 and 23. Since most of the forming method is common to the first embodiment, only the different points will be described, and the same steps as those of the first embodiment in FIG. 23 will be denoted by the same reference numerals as those of the first embodiment, and the description thereof will be omitted. As illustrated in FIG. 22, the heating body 80 is disposed such that the first region R1 of the first protrusion 61 overlapping the heating body 80 is surrounded by the second region R2 of the first protrusion 61 not overlapping the heating body 80 and the region occupied by the flat cable 30 (the region R2 defined by the contour CON of the covering material 34) when the heating body 80 is viewed in the first direction D1 in a state where the flat cable 30 is disposed on the mounting surface 51 in contact with the first protrusion 61. The heating body 80 is disposed such that, when the heating body 80 is viewed in the first direction D1 in a state where the flat cable 30 is disposed on the mounting surface 51 in contact with the first protrusion 61, the third region R3 of the second protrusion 71 overlapping the heating body 80 is surrounded by the fourth region R4 of the second protrusion 71 not overlapping the heating body 80 and the region occupied by the flat cable 30 (the region R0 defined by the contour CON of the covering material 34).

In steps S41 and S42 of FIG. 23, the heating body 80 is moved to the first direction D1. Therefore, in step S51B of FIG. 23, the heating body 80 is abutted against the first region R1 of the first protrusion 61 to melt the thermoplastic material of the first protrusion 61. The molten thermoplastic material flows over the covering material 34. As a result, the molten thermoplastic material is provided on the covering material 34. In step S52B of FIG. 23, the heating body 80 is abutted against the third region R3 of the second protrusion 71 to melt the thermoplastic material of the second protrusion 71. The molten thermoplastic material flows over the covering material 34. As a result, the molten thermoplastic material is provided on the covering material 34.

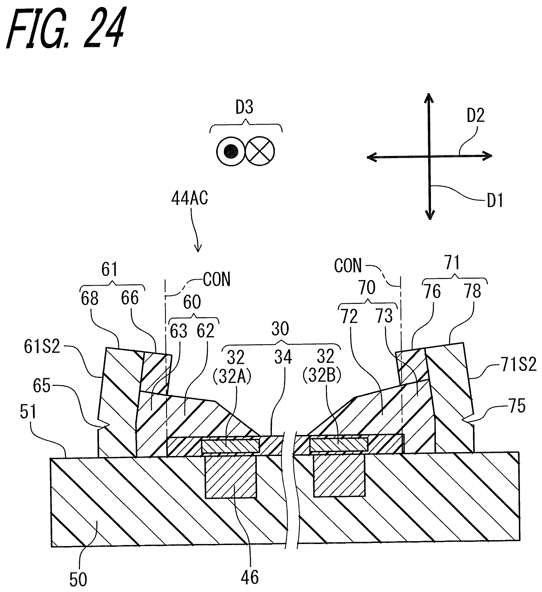

Any of the first to fourth modifications described in the first embodiment may be applied to the method of forming the first bonding member 60 and the first protrusion 61 and the method of forming the second bonding member 70 and the second protrusion 71 according to the third embodiment. In the case where the first bonding member 60 and the first protrusion 61 are formed and the second bonding member 70 and the second protrusion 71 are formed according to the second modification, the first protrusion 61 and the second protrusion 71 may be inclined toward the flat cable 30 as illustrated in FIG. 24.

As described above, the cable assemblies 44A, 44AB, and 44AC include the connector 45, the flat cable 30, and the first bonding member 60. The connector 45 includes at least two bus bars 46 having conductivity, and a connector housing 50 having electrical insulation properties and partially covering the at least two bus bars 46. The flat cable 30 includes at least two core wires 32 having conductivity and electrically connected to at least two bus bars 46, respectively, and a covering material 34 having electrical insulation properties and partially covering the at least two core wires 32. The first bonding member 60 couples the covering material 34 and the connector housing 50 to each other so as to suppress movement of the flat cable 30 with respect to the connector 45. The first bonding member 60 is made of a thermoplastic resin. The connector housing 50 includes a mounting surface 51 on which the flat cable 30 is mounted. The first bonding member 60 includes a first portion 62 provided inside the contour CON of the covering material 34 when viewed from the first direction D1 substantially perpendicular to the mounting surface 51, and a second portion 63 provided outside the contour CON when viewed from the first direction D1 extending from the first portion 62. The first portion 62 includes the first projected area defined inside the contour CON when viewed from the first direction D1. The second portion 63 has a second projected area defined outside the contour CON when viewed from the first direction D1. The first projected area is larger than the second projected area.

In the cable assemblies 44A, 44AB, and 44AC, the flat cable 30 can be easily fixed to the connector 45 with high accuracy while suppressing the warpage of the end portion of the flat cable 30 in the widthwise direction. Further, since the first projected area is larger than the second projected area, the flat cable 30 can be fixed to the connector 45 more strongly by the first bonding member 60.

The method of manufacturing cable assemblies 44A, 44AB, 44C include providing a flat cable 30 including providing at least two conductive core wires 32 and a covering material 34 having electrical insulating properties and partially covering the at least two core wires 32. The manufacturing method includes providing a connector 45 including at least two bus bars 46 having electrical conductivity and a connector housing 50 having electrical insulation properties and partially covering the at least two bus bars 46. The method includes providing the first protrusion 61 made of the thermoplastic material on the mounting surface 51 of the connector housing 50. The manufacturing method includes disposing the flat cable 30 on the mounting surface 51 in contact with the first protrusion 61. The manufacturing method includes melting the thermoplastic material of the first protrusion 61 by bringing the heating body 80 into contact with the first protrusion 61, and providing the melted thermoplastic material on the covering material 34. The manufacturing method includes solidifying the molten thermoplastic material to fix the flat cable 30 to the mounting surface 51. The manufacturing method includes electrically connecting the exposed portions 32E of the at least two core wires 32 exposed from the covering material 34 to the at least two bus bars 46, respectively.

In the manufacturing method, it is possible to suppress the warpage of the end portion of the flat cable 30 in the width direction and to easily fix the flat cable 30 to the connector 45 with high accuracy.

### <Other Applications>

The method of forming the first bonding member 60 and the first protrusion 61 and the method of forming the second bonding member 70 and the second protrusion 71 are not limited to the coupling of the connector 45 and the flat cable 30, and can be applied to a method of manufacturing a cable assembly 44A for fixing the flat cable 30 to a general base having the mounting surface 51. In this case, in step S2 of Fig. 8, Fig. 18, and Fig. 23, the method for manufacturing the cable assembly 44A may provide the base having the mounting surface 51 instead of providing the connector 45. In addition, in the method for manufacturing the cable assembly 44A, step S7 may be omitted.

In particular, the method of manufacturing the cable assembly 44A includes providing a flat cable 30 including at least two conductive core wires 32 and the covering material 34 having electrically insulation property and partially covering the at least two core wires 32. The manufacturing method includes providing a base having a mounting surface 51. The manufacturing method includes providing a base having a mounting surface and providing a first protrusion made of a thermoplastic material on the mounting surface. The manufacturing method includes providing a first protrusion 61 made of a thermoplastic material on the mounting surface 51. The manufacturing method includes moving a heating body 80 for melting the first protrusion 61 in a first direction D1 substantially perpendicular to the mounting surface 51 and bringing the heating body 80 into contact with the first protrusion 61 to melt the thermoplastic material of the first protrusion 61, and providing the melted thermoplastic material on the covering material 34. The manufacturing method includes solidifying the molten thermoplastic material to fix the flat cable 30 to the mounting surface 51. The heating body 80 is brought into contact with the first protrusion 61 such that the first region R1 of the first protrusion 61 overlapping the heating body 80 is surrounded by the second region R2 of the first protrusion 61 not overlapping the heating body 80 and the region R2 occupied by the flat cable 30 when the heating body 80 is viewed in the first direction D1 in a state where the flat cable 30 is disposed on the mounting surface 51 in contact with the first protrusion 61.

Even in such a method, it is possible to provide a technique capable of suppressing the warpage of the end portion of the flat cable 30 in the width direction and easily fixing the flat cable 30 to the base with high accuracy when the flat cable 30 is connected to the base.

It should be noted that, in the present application, the term "comprise" and its derivatives are non-limiting terms that describe the presence of elements, and do not exclude the presence of other elements not described. This also applies to "have", "include" and their derivatives.

In the present application, ordinal numbers such as "first" and "second" are terms for simply identifying a configuration, and do not have other meanings (for example, a specific order or the like). For example, the presence of "a first element" does not imply the presence of "a second element", and the presence of "a second element" does not imply the presence of "a first element".

In addition, the expressions "parallel", "perpendicular", and "coincident" in the present disclosure should not be strictly interpreted, and include the meanings of "substantially parallel", "substantially perpendicular", and "substantially coincident", respectively. In addition, other expressions regarding arrangement are not strictly interpreted.

In addition, the expression "at least one of A and B" in the present disclosure includes, for example, any of (1) only A, (2) only B, and (3) both A and B. The expression "at least one of A, B and C" encompasses, for example, any of (1) A only, (2) B only, (3) C only, (4) A and B, (5) B and C, (6) A and C, and (7) all of A, B and C. In the present disclosure, the phrase "at least one of A and B" is not to be construed as "at least one of A and at least one of B."

Obviously, numerous modifications and variations of the present invention are possible in light of the above teachings. It is therefore to be understood that within the scope of the appended claims, the invention may be practiced otherwise than as specifically described herein.

### [Description of Reference]

10: stator
20: rotator
30: flat cable
31: cable end
32: core wire
32E: exposed portion
33: cutout
34: covering material
36: first end
37: second end
38: first cover notch
39: second cover notch
41E: exposed portion
42: cover
43: fourth portion
44A: cable assembly
44AB: cable assembly
45: connector
46: bus bar
49: connector
50: connector housing
51: mounting surface
52: body wall
53: first protruding portion
54: second protruding portion
55: surface
56: first recess
56C: center
57C: center
60: first bonding member
61: first protrusion
61C: center
62: first portion
62: second portion
63C: center
64: first notch
65: first notch
66: first wall
67: second wall
68: third wall
70: second bonding member
71: second protrusion
71C: center
72: third portion
73: fourth portion
73C: center
76: fourth wall
77: fifth wall
78: sixth wall
80: heating body
81: first inclined surface
80E1: first outer end
100: rotary connector device
AX: rotation axis
CON: contour
D: second direction
D1: first direction
D2: second direction
D3: third direction

## Claims

1. A cable assembly comprising:
a connector including at least two bus bars having electrical conductivity, and a connector housing having electrical insulation properties and partially covering the at least two bus bars;
a flat cable including at least two core wires having electrical conductivity and electrically connected to the at least two bus bars, respectively, and a covering material having electrical insulation properties and partially covering the at least two core wires;
a first bonding member, which is formed of a thermoplastic resin, configured to couple the covering material and the connector housing to suppress movement of the flat cable relative to the connector;
the connector housing including a mounting surface on which the flat cable is mounted;
the first bonding member including a first portion provided inside a contour of the covering material when viewed from a first direction substantially perpendicular to the mounting surface; and
a second portion extending from the first portion and provided outside the contour when viewed from the first direction;
the first portion having a first projected area defined inside the contour when viewed in the first direction;
the second portion having a second projected area defined outside the contour when viewed in the first direction; and
the first projected area being larger than the second projected area.

2. The cable assembly according to claim 1,
wherein the first bonding member is not molded.

3. The cable assembly according to claim 2, further comprising:
a first protrusion adjacent to the first bonding member and extending from the mounting surface in the first direction, in a second direction in which the at least two bus bars are arranged in the first direction,
wherein a second portion of the first bonding member is provided between the first portion of the first bonding member and the first protrusion in the second direction.

4. The cable assembly according to claim 3,
wherein the first bonding member and the first protrusion are made of common thermoplastic material and are directly connected to each other.

5. The cable assembly according to claim 4,
wherein the first protrusion comprises:
a first wall capable of abutting against the covering material,
a second wall capable of abutting against the covering material, provided on the opposite side of the first wall with respect to the first bonding member in a third direction perpendicular to the first direction and the second direction, and
a third wall coupling the first wall and the second wall,
wherein the second portion of the first bonding member is sandwiched between the third wall and the first portion of the first bonding member in the second direction.

6. The cable assembly according to any one of claims 1 to 5,
wherein the connector housing has a first recess in a surface opposite to the mounting surface and the first direction, and
wherein the center of the first recess in a second direction perpendicular to the first direction, in which the at least two bus bars are arranged, is located between a first core wire closest to the second portion among the at least two core wires in the second direction and a center of the second portion in the second direction.

7. The cable assembly according to any one of claims 3 to 5,
wherein the first protrusion has a first notch recessed in the second direction.

8. The cable assembly according to any one of claims 1 to 5,
wherein the covering material of the flat cable has a cutout for exposing the exposed portions of the at least two core wires,
wherein the connector housing includes
a first protruding portion protruding in the second direction toward the exposed portions of the at least two core wires in the cutout, and
a body wall against which a cable end of the flat cable is capable of abutting and extending in the second direction, and
wherein the first protruding portion is capable of abutting against the covering material.

9. The cable assembly according to claim 8,
wherein the covering material of the flat cable includes, on the opposite side of the cable end with respect to the cutout, a first cover notch that is recessed in the second direction from a first end of the second direction of the covering material without exposing the at least two core wires, and
wherein the second portion is provided to engage with the first cover notch.

10. The cable assembly according to claim 6, further comprising:
a second bonding member made of a thermoplastic resin configured to couple the covering material with the connector housing to suppress movement of the flat cable with respect to the connector on the opposite to the first bonding member with respect to the flat cable in the second direction of which the at least two bus bars are arranged, and
wherein the second bonding member includes a third portion provided inside the contour when viewed from the first direction, and a fourth portion extending from the third portion and provided outside the contour when viewed from the first direction,
wherein the third portion has a third projected area defined inside the contour when viewed from the first direction,
wherein the fourth portion has a fourth projected area defined outside the contour when viewed from the first direction, and
wherein the third projected area is larger than the fourth projected area.

11. The cable assembly according to claim 10, further comprising:
a second protrusion adjacent to the second bonding member in the second direction and extending from the mounting surface in the first direction, and
wherein the fourth portion of the second bonding member is provided between the third portion of the second bonding member and the second protrusion in the second direction,
wherein the second bonding member and the second protrusion are made of common thermoplastic material and are directly connected to each other,
wherein the second protrusion includes
a fourth wall that is capable of abutting against the covering material,
a fifth wall being capable of abutting against the covering material, provided on an opposite side of the fourth wall with respect to the second bonding member in a third direction perpendicular to the first direction and the second direction, and
a sixth wall coupling the fourth wall and the fifth wall, and
wherein the fourth portion of the second bonding member is sandwiched between the sixth wall and the third portion of the second bonding member in the second direction.

12. The cable assembly according to claim 11,
wherein the connector housing further includes a second protrusion, on an opposite side of the first protruding portion in the second direction, which protrudes in the second direction toward the exposed portions of the at least two core wires in the cutout, and
wherein the second protruding portion is capable of abutting against the covering material.

13. The cable assembly according to claim 12,
wherein the covering material of the flat cable has a second cover notch that does not expose the at least two core wires and is recessed in the second direction from a second end of the covering material opposite to the first end in the second direction, and
wherein the fourth portion is configured to engage with the second cover notch.

14. A rotary connector device comprising:
a stator;
a rotator rotatable about a rotation axis relative to the stator; and
the cable assembly according to any one of claims 1 to 5.

15. A rotary connector device comprising:
a stator;
a rotator rotatable about a rotation axis relative to the stator; and
the cable assembly according to claim 6.

16. A rotary connector device comprising:
a stator;
a rotator rotatable about a rotation axis relative to the stator; and
the cable assembly according to claim 8.

17. A cable assembly manufacturing method comprising:
providing a flat cable including at least two core wires having conductivity, and a covering material having electrical insulation properties and partially covering the at least two core wires;
providing a connector including at least two bus bars having conductivity, and a connector housing having electrical insulation properties and partially covering the at least two bus bars;
providing a first protrusion made of a thermoplastic material on a mounting surface of the connector housing;
disposing a flat cable on the mounting surface so as to abut against the first protrusion;
melting the thermoplastic material by abutting a heating body against the first protrusion, and providing the thermoplastic material on the covering material;
solidifying the molten thermoplastic material to fix the flat cable to the mounting surface; and
electrically connecting the exposed portions of the at least two core wires exposed from the covering material to the at least two bus bars, respectively.

18. The manufacturing method according to claim 17,
wherein solidifying the molten thermoplastic material includes forming a first bonding member made of the thermoplastic material including a first portion provided inside a contour of the covering material when viewed from a first direction substantially perpendicular to the mounting surface and a second portion extending from the first portion and provided outside the contour when viewed from the first direction,
wherein the first portion has a first projected area defined inside the contour when viewed in the first direction,
wherein the second portion has a second projected area defined outside the contour when viewed in the first direction, and
wherein the first projected area is larger than the second projected area.

19. The manufacturing method according to claim 17,
wherein, when the heating body is viewed in a third direction in which the flat cable extends in a state where the flat cable is disposed on the mounting surface in contact with the first protrusion, the heating body is inclined to be separated from the mounting surface in a first direction substantially perpendicular to the mounting surface as the heating body extends from a first outer end of the heating body facing the first protrusion toward a surface center of the heating body facing the flat cable.

20. The manufacturing method according to claim 17,
wherein abutting the heating body against the first protrusion includes moving the heating body in a first direction substantially perpendicular to the mounting surface, and
wherein, when the heating body is viewed in the first direction in a state where the flat cable is disposed on the mounting surface in contact with the first protrusion, the heating body abuts against the first protrusion such that a first region of the first protrusion overlapping the heating body is surrounded by a second region of the first protrusion not overlapping the heating body and a region occupied by the flat cable.

21. The manufacturing method according to claim 20,
when the heating body is viewed in a third direction in which the flat cable extends in a state where the flat cable is disposed on the mounting surface in contact with the first protrusion, a first inclined surface of the heating body is inclined to be separated from the mounting surface in the first direction as the heating body extends from a first outer end of the heating body facing the first protrusion in the first direction toward a surface center of the heating body facing the flat cable, the first inclined surface of the heating body being abutted against the first protrusion.

22. The manufacturing method according to any one of claims 17 to 21,
wherein providing a first protrusion includes providing a first protrusion having a first notch recessed in a second direction in which the at least two bus bars are arranged.

23. A cable assembly manufacturing method comprising:
providing a flat cable including at least two core wires having electrical conductivity and a covering material having electrical insulation properties and partially covering the at least two core wires;
providing a base having a mounting surface;
providing a first protrusion made of a thermoplastic material on the mounting surface;
disposing the flat cables on the mounting surface to abut against the first protrusion;
melting the thermoplastic material by abutting a heating body against the first protrusion while moving the heating body in a first direction substantially perpendicular to the mounting surface, and providing the melted thermoplastic material on the covering material;
solidifying the melted thermoplastic material to fix the flat cable to the mounting surface; and
abutting the heating body against the first protrusion such that, when the heating body is viewed in the first direction in a state where the flat cable is disposed on the mounting surface in contact with the first protrusion, a first region of the first protrusion overlapping the heating body is surrounded by a second region of the first protrusion not overlapping the heating body and a region occupied by the flat cable.

24. The manufacturing method according to claim 23,
wherein providing the base including providing the base having a first recess on a surface opposite to the first direction and the mounting surface, and
wherein providing the first protrusion on the mounting surface includes providing a first protrusion such that a center of the first recess in a second direction in which the at least two core wires are arranged when the flat cable is fixed to the mounting surface is located between a first core wire closest to the first protrusion among the at least two core wires in the second direction and a center of the first protrusion in the second direction.

25. The manufacturing method according to claim 23 or 24,
wherein providing the first protrusion include providing the first protrusion having a first notch recessed in a second direction, and
wherein disposing the flat cable to be abutted against the first protrusion includes disposing the flat cable such that the at least two core wires are arranged in the second direction.
